(19) Europäisches Patentamt / European Patent Office / Office européen des brevets

(11) **EP 4 415 457 A1**

(12) **EUROPEAN PATENT APPLICATION**
published in accordance with Art. 153(4) EPC

(43) Date of publication:
**14.08.2024 Bulletin 2024/33**

(21) Application number: **22891832.2**

(22) Date of filing: **31.10.2022**

(51) International Patent Classification (IPC):
**H04W 72/04** (2023.01)

(52) Cooperative Patent Classification (CPC):
**H04B 1/00; H04B 10/516; H04W 52/02;**
**H04W 72/04; H04W 72/0453**

(86) International application number:
**PCT/CN2022/128592**

(87) International publication number:
**WO 2023/083036 (19.05.2023 Gazette 2023/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **09.11.2021 CN 202111318168**
**23.12.2021 CN 202111589267**

(71) Applicant: **Huawei Digital Power Technologies**
**Co., Ltd.**
**Shenzhen, Guangdong 518129 (CN)**

(72) Inventor: **LI, Qiang**
**Guangdong 518129 (CN)**

(74) Representative: **MERH-IP Matias Erny Reichl**
**Hoffmann**
**Patentanwälte PartG mbB**
**Paul-Heyse-Strasse 29**
**80336 München (DE)**

(54) **SIGNAL TRANSMISSION METHOD AND APPARATUS**

(57) Embodiments of this application provide a signal transmission method and apparatus. The method may include: A terminal device receives a first signal from a network device by using a first frequency resource; and in response to the first signal, the terminal device transmits a second signal with the network device by using a second frequency resource. The first frequency resource and the second frequency resource are different frequency domain resources in a system bandwidth, and a subcarrier spacing of the first frequency resource is different from that of the second frequency resource. According to this application, when transmitting the first signal and the second signal, the terminal device may use different frequency domain resources in the system bandwidth, thereby improving utilization of spectrum resources. In addition, the subcarrier spacing of the first frequency resource is different from that of the second frequency resource, so that an appropriate subcarrier spacing may be selected based on a feature of the first signal and a feature of the second signal. The method provided in the embodiments may be applied to a communication system, for example, 5G or NR, LTE, V2X, D2D, M2M, MTC, or internet of things.

FIG. 9

**Description**

This application claims priorities to Chinese Patent Application No. 202111318168.3, filed with the China National Intellectual Property Administration on November 9, 2021, and entitled "WAKE-UP SIGNAL TRANSMISSION METHOD", and to Chinese Patent Application No. 202111589267.5, filed with the China National Intellectual Property Administration on December 23, 2021, and entitled "SIGNAL TRANSMISSION METHOD AND APPARATUS", both of which are incorporated herein by reference in their entireties.

**TECHNICAL FIELD**

Embodiments of this application relate to the communication field, and more specifically, to a signal transmission method and apparatus.

**BACKGROUND**

A terminal device may receive a wake-up signal via a separate low-power small circuit such as a wake-up receiver (wake-up receiver, WUR), and a main receiver may be in a deep sleep state. After the terminal device detects the wake-up signal via the WUR, the terminal device triggers wake-up of the main receiver. After the main receiver is woken up, the terminal device may perform data transmission via the main receiver. Currently, there is no solution to disclose a transmission mode of the wake-up signal.

**SUMMARY**

This application provides a signal transmission method and apparatus, so that a frequency resource used by a terminal device to transmit a signal via a WUR is different from a frequency resource used by the terminal device to transmit a signal via a main receiver, thereby improving utilization of spectrum resources.

According to a first aspect, a signal transmission method is provided. The method may be performed by a terminal device, or may be performed by a component (for example, a chip or a circuit) of the terminal device. This is not limited. For ease of description, the following uses an example in which the method is performed by the terminal device for description.

The method may include: The terminal device receives a first signal from a network device by using a first frequency resource; and the terminal device transmits, based on the first signal, a second signal with the network device by using a second frequency resource. The first frequency resource and the second frequency resource are different frequency domain resources in a system bandwidth, and a subcarrier spacing of the first frequency resource is different from a subcarrier spacing of the second frequency resource.

For example, the subcarrier spacing of the first frequency resource is greater than the subcarrier spacing of the second frequency resource.

Based on the foregoing technical solution, after the terminal device receives the first signal from the network device by using the first frequency resource, the terminal device transmits the second signal with the network device by using the second frequency resource in response to the first signal. The first frequency resource and the second frequency resource are different frequency domain resources in the system bandwidth. When transmitting the first signal and the second signal, the terminal device may use different frequency domain resources in the system bandwidth, to avoid a waste of spectrum resources caused by allocating the system bandwidth to the first signal or the second signal, thereby improving utilization of the spectrum resources. In addition, the subcarrier spacing of the first frequency resource is different from the subcarrier spacing of the second frequency resource, so that an appropriate subcarrier spacing may be selected based on a feature of the first signal and a feature of the second signal. For example, when the terminal device receives a wake-up signal (namely, an example of the first signal) by using the first frequency resource, a relatively large subcarrier spacing may be used. In this case, a larger subcarrier spacing indicates a shorter time length of a symbol, and therefore a higher transmission rate.

With reference to the first aspect, in some implementations of the first aspect, time for the terminal device to demodulate the first signal by using the first frequency resource is related to a preset interval, and the preset interval is different from a length of a cyclic prefix corresponding to the subcarrier spacing of the first frequency resource.

Based on the foregoing technical solution, the subcarrier spacing may correspond to a cyclic prefix of a specific length. If the subcarrier spacing of the first frequency resource is relatively large, a length of a cyclic prefix corresponding to the relatively large subcarrier spacing is relatively short, and the cyclic prefix with the relatively short length may not resist inter-symbol interference caused by a multipath delay of a channel. Therefore, the preset interval provided in embodiments of this application can address impact of a multipath delay that may be encountered if the subcarrier spacing of the first frequency resource is relatively large.

With reference to the first aspect, in some implementations of the first aspect, that the terminal device receives a first signal from a network device by using a first frequency resource includes: From a start moment of each receive symbol, the terminal device demodulates the first signal from the network device by using the first frequency resource after the preset interval.

With reference to the first aspect, in some implementations of the first aspect, the preset interval is associated with any one piece of the following information: frequency domain positions of the first frequency resource, the subcarrier spacing of the first frequency resource, or a length of a cyclic prefix used for a bandwidth part BWP of the terminal device; or the method further includes: the terminal device receives the preset interval from the network device.

Based on the foregoing technical solution, the preset interval may be associated with the frequency domain positions of the first frequency resource, so that the preset interval may be learned based on the frequency domain positions of the first frequency resource. Alternatively, the preset interval may be associated with the subcarrier spacing of the first frequency resource, so that the preset interval may be learned based on the subcarrier spacing of the first frequency resource. Alternatively, the preset interval may be associated with the length of the cyclic prefix used for the bandwidth part BWP of the terminal device, so that the preset interval may be learned based on the length of the cyclic prefix used for the BWP of the terminal device. Alternatively, the terminal device may receive the preset interval from the network side.

With reference to the first aspect, in some implementations of the first aspect, that the terminal device receives a first signal from a network device by using a first frequency resource includes: The terminal device receives the first signal from the network device by using a subcarrier other than N1 subcarriers in the first frequency resource. The N1 subcarriers indicate one or more subcarriers that are in the first frequency resource and that are adjacent to the second frequency resource, and N1 is an integer greater than 1 or equal to 1.

In an example, the N1 subcarriers may include one or more subcarriers with a largest number/largest numbers (or referred to as an index or a sequence number) and/or one or more subcarriers with a smallest number/smallest numbers in a bandwidth of the first frequency resource.

Based on the foregoing technical solution, guard subcarriers (namely, the N1 subcarriers) are set on one side or two sides of a bandwidth allocated to the first frequency resource, and the first signal is not transmitted on the guard subcarriers. In this way, even if the subcarrier spacing of the first frequency resource is different from the subcarrier spacing of the second frequency resource, subcarrier interference between the first signal transmitted by using the first frequency resource and the second signal transmitted by using the second frequency resource is still greatly reduced because of the guard subcarriers.

With reference to the first aspect, in some implementations of the first aspect, that the terminal device transmits a second signal with the network device by using a second frequency resource includes: The terminal device transmits the second signal with the network device by using a subcarrier other than N2 subcarriers in the second frequency resource. The N2 subcarriers indicate one or more subcarriers that are in the second frequency resource and that are adjacent to the first frequency resource, and N2 is an integer greater than 1 or equal to 1.

Based on the foregoing technical solution, guard subcarriers (namely, the N2 subcarriers) are set on one side or two sides of a bandwidth allocated to the second frequency resource, and the second signal is not transmitted on the guard subcarriers. In this way, even if the subcarrier spacing of the first frequency resource is different from the subcarrier spacing of the second frequency resource, subcarrier interference between the first signal transmitted by using the first frequency resource and the second signal transmitted by using the second frequency resource is still greatly reduced because of the guard subcarriers.

With reference to the first aspect, in some implementations of the first aspect, the frequency domain positions of the first frequency resource are discontinuous.

Based on the foregoing technical solution, the frequency domain positions of the first frequency resource are discontinuous, so that a frequency diversity gain may be obtained through frequency hopping, to obtain better transmission effect.

With reference to the first aspect, in some implementations of the first aspect, the frequency domain positions of the first frequency resource include a first frequency domain position and a second frequency domain position, and that the terminal device receives a first signal from a network device by using a first frequency resource includes: The terminal device receives a part of the first signal from the network device at the first frequency domain position, and the terminal device receives a remaining part of the first signal from the network device at the second frequency domain position; or the terminal device receives the first signal from the network device at the first frequency domain position in first time, and the terminal device receives the first signal from the network device at the second frequency domain position in second time.

With reference to the first aspect, in some implementations of the first aspect, the method further includes: The terminal device receives configuration information about the first frequency resource by using the second frequency resource.

With reference to the first aspect, in some implementations of the first aspect, the configuration information about the first frequency resource includes one or more pieces of the following information: the bandwidth of the first frequency resource, the frequency domain positions of the first frequency resource, and the subcarrier spacing of the first frequency resource.

With reference to the first aspect, in some implementations of the first aspect, the first signal is a signal obtained by multiplying a time domain signal by a window function.

For example, the window function indicates a function whose values at both ends are relatively small and whose intermediate values are relatively large.

Based on the foregoing technical solution, the first signal is the signal obtained by multiplying the time domain signal by the window function, so that subcarrier interference between the first signal and the second signal may be reduced in a time domain windowing manner.

According to a second aspect, a signal transmission method is provided. The method may be performed by a terminal device, or may be performed by a component (for example, a chip or a circuit) of the terminal device. This is not limited. For ease of description, the following uses an example in which the method is performed by the terminal device for description.

The terminal device includes a first module and a second module. The method may include: The terminal device receives a first signal from a network device via the first module by using a first frequency resource; and the terminal device transmits, based on the first signal, a second signal with the network device via the second module by using a second frequency resource. The first frequency resource and the second frequency resource are different frequency domain resources in a system bandwidth, and a subcarrier spacing of the first frequency resource is different from a subcarrier spacing of the second frequency resource.

Based on the foregoing technical solution, after the terminal device receives the first signal from the network device via the first module, the terminal device transmits the second signal with the network device via the second module in response to the first signal. The first frequency resource used when the first signal is received via the first module and the second frequency resource used when the second signal is transmitted via the second module are different frequency domain resources in the system bandwidth. When transmitting signals via different modules, the terminal device may use different frequency domain resources in the system bandwidth, to avoid a waste of spectrum resources caused by allocating the system bandwidth to the first module or the second module, thereby improving utilization of the spectrum resources. In addition, the subcarrier spacing of the first frequency resource is different from the subcarrier spacing of the second frequency resource, so that an appropriate subcarrier spacing may be selected based on a feature of the first signal and a feature of the second signal. For example, when the terminal device receives a wake-up signal (namely, an example of the first signal) via the first module, a relatively large subcarrier spacing may be used. In this case, a larger subcarrier spacing indicates a shorter time length of a symbol, and therefore a higher transmission rate.

With reference to the second aspect, in some implementations of the second aspect, time for the terminal device to demodulate the first signal via the first module by using the first frequency resource is related to a preset interval, and the preset interval is different from a length of a cyclic prefix corresponding to the subcarrier spacing of the first frequency resource.

With reference to the second aspect, in some implementations of the second aspect, that the terminal device receives a first signal from a network device via the first module by using a first frequency resource includes: From a start moment of each receive symbol, the terminal device demodulates the first signal from the network device via the first module by using the first frequency resource after the preset interval.

With reference to the second aspect, in some implementations of the second aspect, the preset interval is associated with any one piece of the following information: frequency domain positions of the first frequency resource, the subcarrier spacing of the first frequency resource, or a length of a cyclic prefix used for a bandwidth part BWP of the terminal device; or the method further includes: the terminal device receives the preset interval from the network device.

With reference to the second aspect, in some implementations of the second aspect, that the terminal device receives a first signal from a network device via the first module by using a first frequency resource includes: The terminal device receives the first signal from the network device via the first module by using a subcarrier other than N1 subcarriers in the first frequency resource. The N1 subcarriers indicate one or more subcarriers that are in the first frequency resource and that are adjacent to the second frequency resource, and N1 is an integer greater than 1 or equal to 1.

With reference to the second aspect, in some implementations of the second aspect, that the terminal device transmits a second signal with the network device via the second module by using a second frequency resource includes: The terminal device transmits the second signal with the network device via the second module by using a subcarrier other than N2 subcarriers in the second frequency resource. The N2 subcarriers indicate one or more subcarriers that are in the second frequency resource and that are adjacent to the first frequency resource, and N2 is an integer greater than 1 or equal to 1.

With reference to the second aspect, in some implementations of the second aspect, the frequency domain positions of the first frequency resource are discontinuous.

With reference to the second aspect, in some implementations of the second aspect, the frequency domain positions of the first frequency resource include a first frequency domain position and a second frequency domain position, and that the terminal device receives a first signal from a network device via the first module by using a first frequency resource includes: The terminal device receives a part of the first signal from the network device via the first module at the first frequency domain position, and the terminal device receives a remaining part of the first signal from the network device via the first module at the second frequency domain position; or the terminal device receives the first signal from the network device via the first module at the first frequency domain position in first time, and the terminal device receives the first signal from the network device via the first module at the second frequency domain position in second time.

With reference to the second aspect, in some implementations of the second aspect, the method further includes: The terminal device receives configuration information about the first frequency resource via the second module by using the second frequency resource.

With reference to the second aspect, in some implementations of the second aspect, the configuration information about the first frequency resource includes one or more pieces of the following information: a bandwidth of the first frequency resource, the frequency domain positions of the first frequency resource, and the subcarrier spacing of the first frequency resource.

With reference to the second aspect, in some implementations of the second aspect, the first signal is a signal obtained by multiplying a time domain signal by a window function.

For beneficial effects of the second aspect and the possible designs of the second aspect, refer to related descriptions of the first aspect. Details are not described herein again.

According to a third aspect, a signal transmission method is provided. The method may be performed by a network device, or may be performed by a component (for example, a chip or a circuit) of the network device. This is not limited. For ease of description, the following uses an example in which the method is performed by the network device for description.

The method may include: The network device sends a first signal to a first terminal device by using a first frequency resource; and the network device transmits, based on the first signal, a second signal with the first terminal device by using a second frequency resource. The first frequency resource and the second frequency resource are different frequency domain resources in a system bandwidth, and a subcarrier spacing of the first frequency resource is different from a subcarrier spacing of the second frequency resource.

Based on the foregoing technical solution, after the network device sends the first signal to the first terminal device by using the first frequency resource, the network device transmits the second signal with the terminal device by using the second frequency resource in response to the first signal. The first frequency resource and the second frequency resource are different frequency domain resources in the system bandwidth. When transmitting the first signal and the second signal, the network device may use different frequency domain resources in the system bandwidth, to avoid a waste of spectrum resources caused by allocating the system bandwidth to the first signal or the second signal, thereby improving utilization of the spectrum resources. In addition, the subcarrier spacing of the first frequency resource is different from the subcarrier spacing of the second frequency resource, so that an appropriate subcarrier spacing may be selected based on a feature of the first signal and a feature of the second signal. For example, when the network device receives a wake-up signal (namely, an example of the first signal) by using the first frequency resource, a relatively large subcarrier spacing may be used. In this case, a larger subcarrier spacing indicates a shorter time length of a symbol, and therefore a higher transmission rate.

With reference to the third aspect, in some implementations of the third aspect, the method further includes: When the network device sends the first signal to the first terminal device by using the first frequency resource, the network device transmits a signal with a second terminal device by using the second frequency resource.

With reference to the third aspect, in some implementations of the third aspect, the method further includes: The network device sends a preset interval to the first terminal device. Alternatively, the preset interval is associated with any one piece of the following information: frequency domain positions of the first frequency resource, the subcarrier spacing of the first frequency resource, or a length of a cyclic prefix used for a bandwidth part BWP of the terminal device. The preset interval is used by the first terminal device to determine time for demodulating the first signal, and the preset interval is different from a length of a cyclic prefix corresponding to the subcarrier spacing of the first frequency resource.

With reference to the third aspect, in some implementations of the third aspect, that the network device sends a first signal to a first terminal device by using a first frequency resource includes: The network device sends the first signal to the first terminal device by using a subcarrier other than N1 subcarriers in the first frequency resource. The N1 subcarriers indicate one or more subcarriers that are in the first frequency resource and that are adjacent to the second frequency resource, and N1 is an integer greater than 1 or equal to 1.

With reference to the third aspect, in some implementations of the third aspect, that the network device transmits a second signal with the first terminal device by using a second frequency resource includes: The network device transmits the second signal with the first terminal device by using a subcarrier other than N2 subcarriers in the second frequency resource. The N2 subcarriers indicate one or more subcarriers that are in the second frequency resource and that are adjacent to the first frequency resource, and N2 is an integer greater than 1 or equal to 1.

With reference to the third aspect, in some implementations of the third aspect, the first signal is a signal obtained by multiplying a time domain signal by a window function.

With reference to the third aspect, in some implementations of the third aspect, the frequency domain positions of the first frequency resource are discontinuous.

With reference to the third aspect, in some implementations of the third aspect, the frequency domain positions of the first frequency resource include a first frequency domain position and a second frequency domain position, and that the network device sends a first signal to a first terminal device by using a first frequency resource includes: The network device sends a part of the first signal to the first terminal device at the first frequency domain position, and the network device sends a remaining part of the first signal to the first terminal device at the second frequency domain position; or the network device sends the first signal to the first terminal device at the first frequency domain position in first time, and the network device sends the first signal to the first terminal device at the second frequency domain position in second time.

With reference to the third aspect, in some implementations of the third aspect, the method further includes: The network device sends configuration information about the first frequency resource to the first terminal device by using the second frequency resource.

With reference to the third aspect, in some implementations of the third aspect, the configuration information about the first frequency resource includes one or more pieces of the following information: a bandwidth of the first frequency resource, the frequency domain positions of the first frequency resource, and the subcarrier spacing of the first frequency resource.

For beneficial effects of the third aspect and the possible designs of the third aspect, refer to related descriptions of the first aspect. Details are not described herein again.

According to a fourth aspect, a signal transmission method is provided. The method may be performed by a network device, or may be performed by a component (for example, a chip or a circuit) of the network device. This is not limited. For ease of description, the following uses an example in which the method is performed by the network device for description.

The network device includes a first module and a second module. The method may include: The network device sends a first signal to a first terminal device via the first module by using a first frequency resource; and the network device transmits, based on the first signal, a second signal with the first terminal device via the second module by using a second frequency resource. The first frequency resource and the second frequency resource are different frequency domain resources in a system bandwidth, and a subcarrier spacing of the first frequency resource is different from a subcarrier spacing of the second frequency resource.

Based on the foregoing technical solution, after the network device sends the first signal to the first terminal device via the first module, the network device transmits the second signal with the terminal device via the second module in response to the first signal. The first frequency resource used when the first signal is sent via the first module and the second frequency resource used when the second signal is transmitted via the second module are different frequency domain resources in the system bandwidth. When transmitting signals via different modules, the network device may use different frequency domain resources in the system bandwidth, to avoid a waste of spectrum resources caused by allocating the system bandwidth to the first module or the second module, thereby improving utilization of the spectrum resources. In addition, the subcarrier spacing of the first frequency resource is different from the subcarrier spacing of the second frequency resource, so that an appropriate subcarrier spacing may be selected based on a feature of the first signal and a feature of the second signal. For example, when the network device sends a wake-up signal (namely, an example of the first signal) via the first module, a relatively large subcarrier spacing may be used. In this case, a larger subcarrier spacing indicates a shorter time length of a symbol, and therefore a higher transmission rate.

With reference to the fourth aspect, in some implementations of the fourth aspect, the method further includes: When the network device sends the first signal to the first terminal device via the first module by using the first frequency resource, the network device transmits a signal with a second terminal device via the second module by using the second frequency resource.

With reference to the fourth aspect, in some implementations of the fourth aspect, the method further includes: The network device sends a preset interval to the first terminal device. Alternatively, the preset interval is associated with any one piece of the following information: frequency domain positions of the first frequency resource, the subcarrier spacing of the first frequency resource, or a length of a cyclic prefix used for a bandwidth part BWP of the terminal device. The preset interval is used by the first terminal device to determine time for demodulating the first signal, and the preset interval is different from a length of a cyclic prefix corresponding to the subcarrier spacing of the first frequency resource.

With reference to the fourth aspect, in some implementations of the fourth aspect, that the network device sends a first signal to a first terminal device via the first module by using a first frequency resource includes: The network device sends the first signal to the first terminal device via the first module by using a subcarrier other than N1 subcarriers in the first frequency resource. The N1 subcarriers indicate one or more subcarriers that are in the first frequency resource and that are adjacent to the second frequency resource, and N1 is an integer greater than 1 or equal to 1.

With reference to the fourth aspect, in some implementations of the fourth aspect, that the network device transmits a second signal with the first terminal device via the second module by using a second frequency resource includes: The network device transmits the second signal with the first terminal device via the second module by using a subcarrier other than N2 subcarriers in the second frequency resource. The N2 subcarriers indicate one or more subcarriers that are in the second frequency resource and that are adjacent to the first frequency resource, and N2 is an integer greater than 1 or equal to 1.

With reference to the fourth aspect, in some implementations of the fourth aspect, the first signal is a signal obtained by multiplying a time domain signal by a window function.

With reference to the fourth aspect, in some implementations of the fourth aspect, the frequency domain positions of the first frequency resource are discontinuous.

With reference to the fourth aspect, in some implementations of the fourth aspect, the frequency domain positions of the first frequency resource include a first frequency domain position and a second frequency domain position, and that the network device sends a first signal to a first terminal device via the first module by using a first frequency resource includes: The network device sends a part of the first signal to the first terminal device via the first module at the first frequency domain position, and the network device sends a remaining part of the first signal to the first terminal device via the first module at the second frequency domain position; or the network device sends the first signal to the first terminal device via the first module at the first frequency domain position in first time, and the network device sends the first signal to the first terminal device via the first module at the second frequency domain position in second time.

With reference to the fourth aspect, in some implementations of the fourth aspect, the method further includes: The network device sends configuration information about the first frequency resource to the first terminal device via the second module by using the second frequency resource.

With reference to the fourth aspect, in some implementations of the fourth aspect, the configuration information about the first frequency resource includes one or more pieces of the following information: a bandwidth of the first frequency resource, the frequency domain positions of the first frequency resource, and the subcarrier spacing of the first frequency resource.

For beneficial effects of the fourth aspect and the possible designs of the fourth aspect, refer to related descriptions of the first aspect. Details are not described herein again.

According to a fifth aspect, a communication apparatus is provided. The apparatus is configured to perform the method according to any one of the possible implementations of the first aspect to the fourth aspect. Specifically, the apparatus may include units and/or modules, for example, a processing unit and/or a communication unit, configured to perform the method according to any one of the possible implementations of the first aspect to the fourth aspect.

In an implementation, the apparatus is a communication device (for example, a terminal device, or for another example, a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device, or for another example, a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method according to any one of the possible implementations of the first aspect to the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal device, or for another example, a network device).

In another implementation, the apparatus is a chip, a chip system, or a circuit used in a communication device (for example, a terminal device, or for another example, a network device).

According to a seventh aspect, this application provides a processor, configured to perform the methods provided in the first aspect to the fourth aspect.

Operations such as sending and obtaining/receiving related to the processor may be understood as operations such as output, receiving, and input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code to be executed by a device, and the program code includes the method according to any one of the possible implementations of the first aspect to the fourth aspect.

According to a ninth aspect, a computer program product including instructions is provided. When the computer program product is run on a computer, the computer is enabled to perform the method according to any one of the possible implementations of the first aspect to the fourth aspect.

According to a tenth aspect, a communication system is provided, including the terminal device and the network device described above.

## BRIEF DESCRIPTION OF DRAWINGS

FIG. 1 is a schematic diagram of a wireless communication system 100 applicable to an embodiment of this application;

FIG. 2 is a schematic diagram of a main circuit and a wake-up circuit;

FIG. 3 is a schematic diagram of a waveform when OOK is used for signal modulation;

FIG. 4 is a schematic diagram of sending a signal and receiving the signal by using an OFDM modulation technology;

FIG. 5 is a schematic diagram of spectrum resource division of OFDM modulation;

FIG. 6 is a schematic diagram of time domain and frequency domain resources of OFDM corresponding to different subcarrier spacings;

FIG. 7 is a schematic diagram of an OOK signal generated based on an OFDM transmitter;

FIG. 8 is a schematic diagram of sending a first signal and a second signal in a time division manner;

FIG. 9 is a schematic diagram of a signal processing method 900 according to an embodiment of this application;

FIG. 10 is a schematic diagram of a signal transmitted on a first link and a second link according to an embodiment of this application;

FIG. 11 is a schematic diagram of using different subcarrier spacings for a first link and a second link according to an embodiment of this application;

FIG. 12 is a schematic diagram of a multipath delay and an ISI interval;

FIG. 13 is a schematic diagram in which no interference exists and interference exists between subcarriers;

FIG. 14 is a schematic diagram in which inter-subcarrier interference is reduced by using a guard subcarrier according to an embodiment of this application;

FIG. 15 is another schematic diagram in which inter-subcarrier interference is reduced by using a guard subcarrier according to an embodiment of this application;

FIG. 16 is a schematic diagram of a raised cosine window function according to an embodiment of this application;

FIG. 17 is a schematic diagram of a frequency domain response of a channel;

FIG. 18 is a schematic diagram of frequency domain positions of a first frequency resource according to an embodiment of this application;

FIG. 19 is a schematic flowchart of sending a first signal at a plurality of discontinuous frequency domain positions according to an embodiment of this application;

FIG. 20 is a schematic block diagram of a communication apparatus according to an embodiment of this application;

FIG. 21 is a schematic block diagram of another communication apparatus according to an embodiment of this application; and

FIG. 22 is a schematic block diagram of still another communication apparatus according to an embodiment of this application.

## DESCRIPTION OF EMBODIMENTS

The following describes technical solutions of embodiments in this application with reference to the accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may also be applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and an internet of things (internet of things, IoT) communication system or another communication system.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data, for example, a handheld device or a vehicle-mounted device having a wireless connection function. Currently, examples of some terminals are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication capability, a computing device or another processing device connected to a wireless modem, a wearable device, a terminal device in a 5G network, a terminal device in a future evolved public land mobile network (public land mobile network, PLMN), and the like. This is not limited in embodiments of this application.

By way of example and not limitation, the terminal device in embodiments of this application may alternatively be a wearable device. The wearable device may also be referred to as a wearable smart device, which is a generic term for wearable devices that are developed through intelligent design on daily wearables by using wearable technologies, such as glasses, gloves, watches, clothes, and shoes. The wearable device is a portable device that is worn on a body directly or integrated into clothes or an accessory of a user. The wearable device is not only a hardware device, but also implements a powerful function through software support, data exchange, and cloud interaction. In a broad sense, wearable smart devices include full-featured and large-sized devices that can implement all or some of functions without relying on smartphones, for example, smart watches or smart glasses, and include devices that focus only on a specific type of application function and need to be used together with other devices such as smartphones, for example, various smart bands and smart jewelry for monitoring physical signs.

In embodiments of this application, an apparatus configured to implement a function of a terminal device may be a terminal device, or may be an apparatus, for example, a chip system or a chip, that can support a terminal device in implementing the function. The apparatus may be installed in the terminal device. In embodiments of this application, the chip system may include a chip, or may include a chip and another discrete device.

The network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

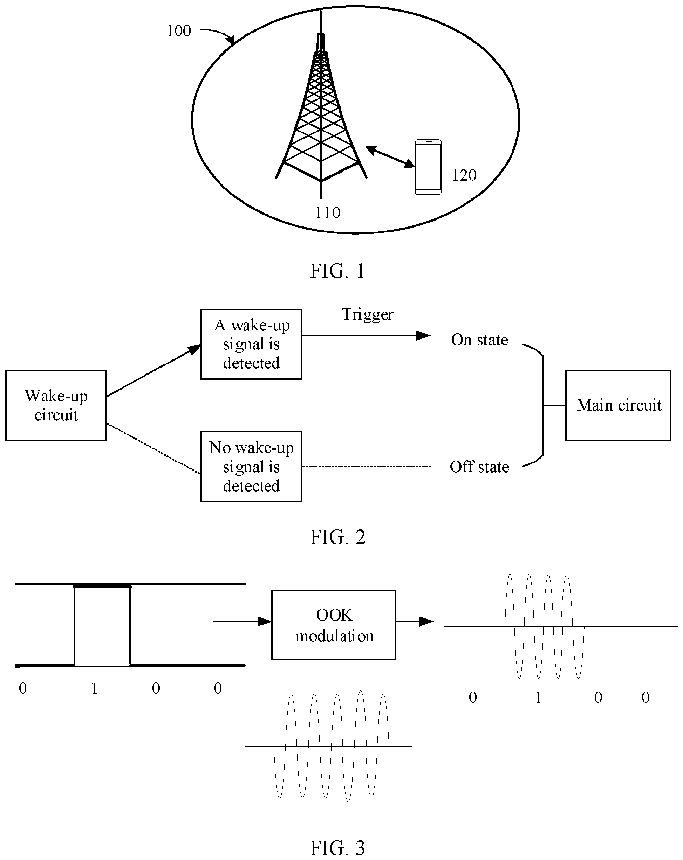

First, with reference to FIG. 1, a network architecture applicable to this application is briefly described as follows.

FIG. 1 is a schematic diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for both the network device and the terminal device, and the network device and the terminal device may communicate with each other by using a multi-antenna technology.

When the network device communicates with the terminal device, the network device may manage one or more cells, and one cell may have an integer quantity of terminal devices. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that, the cell may be understood as an area within a coverage range of a wireless signal of a network device.

It should be understood that FIG. 1 is only a simplified schematic diagram illustrated for ease of understanding. The communication system 100 may further include another network device or another terminal device, which is not shown in FIG. 1. Embodiments of this application are applicable to any communication scenario in which a transmit end device communicates with a receive end device.

For ease of understanding of embodiments of this application, terms in this application are described briefly.

1. Main circuit and wake-up circuit

In a wireless communication system, power saving of a terminal device is one of important objectives to be pursued. For example, battery life of some forms of terminal devices (such as a mobile phone and a wearable device) affects user experience. Because it is difficult to replace a battery of some forms of terminal devices (such as a wireless industrial sensor), it is expected during design that these types of terminal devices can work for a relatively long period of time without replacing the battery. Therefore, power saving of the terminal device is an aspect that needs to be focused on in a wireless communication technology.

To implement power saving of the terminal device, in the wireless communication system, the terminal device is usually enabled to work in different modes when different service requirements need to be met. For example, when the terminal device needs to transmit data, the terminal device works in a connected (connected) state (or referred to as a connected mode). In this case, data is transmitted between the terminal device and a network device. When the terminal device works in the connected state, power consumption is relatively high. For another example, when the terminal device does not need to transmit data, the terminal device works in an idle (idle) state. In this case, the terminal device enables a circuit to enter a sleep state. For example, the terminal device may periodically detect whether there is data sent to the terminal device. If there is data sent, the terminal device enters the connected state; or otherwise, the terminal device remains in the idle state and continues sleeping. When the terminal device works in the idle state, power consumption is relatively low.

To reduce power consumption as much as possible for the terminal device in the idle state, the terminal device may include a main circuit and a wake-up circuit.

(1) The wake-up circuit is also referred to as a wake-up receiver (wake-up receiver, WUR) or a wake-up module, and may be understood as a circuit used by the terminal device in the idle state, or may be understood as a separate low-power small circuit. The low-power small circuit may be implemented by using a separate small circuit or chip with a simple structure, and has relatively low power consumption. A signal received by the terminal device via the wake-up circuit may be referred to as a wake-up signal (wake up signal/radio, WUS/WUR). It may be understood that the wake-up circuit is merely named for differentiation, and a specific name thereof does not constitute a limitation on the protection scope of this application. For example, without loss of generality, the wake-up circuit may also be described as a first circuit (or a first module). The following uses the wake-up circuit for a uniform description.

The signal received by the terminal device via the wake-up circuit may be referred to as being transmitted on a wake-up link. The wake-up link represents a connection relationship between the terminal device and the network device, and is a logical concept rather than a physical entity. It may be understood that the wake-up link is merely named for differentiation, and a specific name thereof does not constitute a limitation on the protection scope of this application. For example, without loss of generality, the wake-up link may also be described as a first link. It should be further understood that the wake-up signal is merely an example name, and a name thereof is not limited in this application.

(2) The main circuit is also referred to as a main receiver or a main module, and may be understood as a circuit used when the terminal device normally transmits data, or a circuit used when the terminal device transmits data in the connected state. When the terminal device transmits data via the main circuit, power consumption is relatively high. It may be understood that the main circuit is merely named for differentiation, and a specific name thereof does not constitute a limitation on the protection scope of this application. For example, without loss of generality, the main circuit may also be described as a second circuit (or a second module). The following uses the main circuit for a uniform description.

A signal received by the terminal device via the main circuit may be referred to as being transmitted on a main link. The main link represents a connection relationship between the terminal device and the network device, and is a logical concept rather than a physical entity. It may be understood that the main link is merely named for differentiation, and a specific name thereof does not constitute a limitation on the protection scope of this application. For example, without loss of generality, the main link may also be described as a second link.

In the following, for differentiation and without loss of generality, a signal transmitted by the terminal device via the wake-up circuit is denoted as a first signal, and a signal transmitted by the terminal device via the main circuit is denoted as a second signal.

In an example, FIG. 2 is a schematic diagram of a main circuit and a wake-up circuit.

As shown in FIG. 2, the terminal device may receive (or be referred to as "detect") a first signal via the wake-up circuit, and the terminal device may receive a second signal via the main circuit. It is assumed that the terminal device receives the first signal via the wake-up circuit. If the terminal device does not detect the first signal, the terminal device continues receiving the first signal via the wake-up circuit, and the main circuit may be in an off state (or a sleep state); or if the terminal device detects the first signal, the terminal device triggers wake-up of the main circuit, that is, enables the main circuit to be in/be switched to an on state (or referred to as a working state, or referred to as an active state). After the main circuit is turned on, the terminal device may transmit the second signal via the main circuit.

2. First frequency resource and second frequency resource

The following uses the terminal device as an example to describe the first frequency resource and the second frequency resource with reference to several cases.

In a first possible case, the terminal device includes a first module and a second module. For example, power consumption of the first module may be less than power consumption of the second module. The first module may be, for example, the wake-up circuit in FIG. 2, or may be a receiving module of the wake-up circuit. The second module may be, for example, the main circuit in FIG. 2, or may be a receiving module of the main circuit. In this application, the first module may be replaced with a wake-up circuit (or a first circuit), and the second module may be replaced with a main circuit (or a second circuit). The following uses the first module and the second module for a uniform description.

In this case, the first frequency resource may indicate a frequency resource used by the terminal device to transmit a signal via the first module, and the second frequency resource may indicate a frequency resource used by the terminal device to transmit a signal via the second module.

In a second possible case, the terminal device may work on a first link (or the terminal device may transmit a signal on the first link), or may work on a second link (or the terminal device may transmit a signal on the second link). In other words, the terminal device and the network device may communicate through the first link, or may communicate through the second link. For example, as described above, the first link may indicate a link used when the terminal device transmits a signal via the wake-up circuit in FIG. 2, and the second link may indicate a link used when the terminal device transmits a signal via the main circuit in FIG. 2.

In this case, the first frequency resource may indicate a frequency resource used by the terminal device to transmit a signal on the first link, and the second frequency resource may indicate a frequency resource used by the terminal device to transmit a signal on the second link.

In a third possible case, the terminal device may be in a first state (state) (for example, in a WUR state) or a second state. The first state and the second state are used to describe different states (for example, different radio resource control (radio resource control, RRC) states) of the terminal device. For example, power consumption of the terminal device in the first state may be less than power consumption of the terminal device in the second state. The first state may be, for example, an idle state or an inactive state, or may be a WUR state. The second state may be, for example, a connected (connected) state, or may be an idle state or an inactive state. The first state (for example, the WUR state) may correspond to that the terminal device works on the first link or correspond to that the terminal device transmits a signal via the first module.

In this case, the first frequency resource may indicate a frequency resource used to transmit a signal when the terminal device is in the first state, and the second frequency resource may indicate a frequency resource used to transmit a signal when the terminal device is in the second state.

In a fourth possible case, the terminal device may be in a first mode (mode) (for example, in a WUR mode) or a second mode. The first mode and the second mode are used to describe as follows: The terminal device transmits signals in different modes. For example, power consumption when the terminal device transmits a signal in the first mode may be less than power consumption when the terminal device transmits a signal in the second mode. The first mode (for example, the WUR mode) may correspond to that the terminal device works on the first link or correspond to that the terminal device transmits a signal via the first module.

In this case, the first frequency resource may indicate a frequency resource used to transmit a signal when the terminal device is in the first mode, and the second frequency resource may indicate a frequency resource used to transmit a signal when the terminal device is in the second mode.

It can be learned from the foregoing description that, transmitting a signal by using the first frequency resource may be replaced with any one of the following: transmitting a signal via the first module, transmitting a signal on the first link, transmitting a signal in the first state, and transmitting a signal in the first mode; and transmitting a signal by using the second frequency resource may be replaced with any one of the following: transmitting a signal via the second module, transmitting a signal on the second link, transmitting a signal in the second state, and transmitting a signal in the second mode. The following mainly uses the first frequency resource and the second frequency resource as examples for a uniform description.

It may be understood that the foregoing mainly uses the terminal device as an example to describe the first frequency resource and the second frequency resource. It may be understood that the foregoing description is also applicable to another communication device (for example, a network device). For brevity, details are not described herein again.

3. First signal and second signal

As described above, the signal transmitted via the wake-up circuit is denoted as the first signal, and the signal transmitted via the main circuit is denoted as the second signal. In this case, the first signal may also indicate a signal transmitted by using the first frequency resource, and the second signal may also indicate a signal transmitted by using the second frequency resource.

(1) The first signal and the second signal have different modulation schemes.

For example, a modulation scheme of the first signal is on-off keying (on-off keying, OOK), and a modulation scheme of the second signal is orthogonal frequency division multiplexing (orthogonal frequency division multiplexing, OFDM) modulation or discrete Fourier transformation-spread-orthogonal frequency division multiplexing (discrete Fourier transformation-spread-orthogonal frequency division multiplexing, DFT-s-OFDM) modulation.

(2) The first signal and the second signal have different modulation schemes.

For example, a waveform of the first signal is OOK, and a waveform of the second signal is an OFDM waveform or a DFT-s-OFDM waveform.

(3) The first signal is different from the second signal.

For example, the first signal includes paging information. The paging information includes information about one or more terminal devices that need to receive paging. Information included in the first signal may be predefined in a standard, or may be configured by a network side. This is not limited. "Configured by a network side" means that the network side performs configuration on the second link. For example, after obtaining configuration information about the first link on the second link, the terminal device switches to work on the first link.

For another example, the second signal may be a signal different from the first signal. The second signal may indicate, for example, various downlink signals or channels in an NR signal (namely, an existing NR signal). In an example, the second signal includes any one or more of the following: a synchronization signal block (synchronization signal block, SSB), a PDCCH, a PDSCH, a channel state information reference signal (channel state information reference signal, CSI-RS), a phase tracking reference signal (phase tracking reference signal, PTRS), a positioning reference signal (positioning reference signal, PRS), and a demodulation reference signal (demodulation reference signal, DMRS). The second signal may further indicate various uplink signals or channels in the NR signal. In an example, the second signal includes any one or more of the following: a DMRS, a physical uplink control channel (physical uplink control channel, PUCCH), a physical uplink shared channel (physical uplink shared channel, PUSCH), and a sounding reference signal (sounding reference signal, SRS).

For another example, the second signal may carry one or more pieces of the following information: a paging early indication (paging early indication, PEI), paging DCI (paging DCI), and a paging message (such as a paging PDCCH and a paging PDSCH). The PEI may indicate whether paging is sent in a PO associated with the PEI.

For another example, the second signal may indicate a signal in a random access procedure of the terminal device. For example, the second signal includes a random access preamble sequence (preamble).

4. OOK

To ensure a power consumption gain, a signal may use OOK for modulation. That is, whether a signal is sent is used to modulate information, and a corresponding wake-up circuit may receive the signal by using an envelope detection method. In an OOK modulation technology, demodulation can be implemented by using a receiver with very low complexity, so that low power consumption of the wake-up circuit can be achieved.

When OOK is used for signal modulation, each bit (namely, an encoded bit) may correspond to one symbol (symbol). Equivalently, a symbol may also be referred to as a chip (chip), or may be referred to as another name. This is not limited.

For example, when a bit (bit) is 1, a signal is sent in a symbol length (that is, a signal transmit power in the symbol length is not 0). When a bit is 0, no signal is sent in the symbol length (that is, a signal transmit power in the symbol length is 0). Alternatively, it may be understood that, in OOK modulation, if energy is sent, it represents "1". If no energy is sent, it represents "0".

In an example, FIG. 3 is a schematic diagram of a waveform when OOK is used for signal modulation. As shown in FIG. 3, the waveform shown in FIG. 3 may represent four bits "0100". As shown in FIG. 3, a communication system usually uses a specific frequency (frequency) for sending, and a sent signal needs to be modulated on a carrier (a sine signal in FIG. 3 represents a carrier). At a receive end, the receive end detects an envelope (or energy) of a received signal, and determines whether a sent symbol is "0" or "1", to complete demodulation.

When OOK is used for signal modulation, a receiver has a simple structure and relatively low power consumption, and can achieve energy saving of the wake-up circuit. However, a transmission rate is low. Specifically, when OOK is used for signal modulation, each symbol can only transmit one bit. In addition, in consideration of a problem of a multipath delay in the wireless communication system, a time length of each symbol needs to be long enough to reduce inter-symbol interference caused by the multipath delay. Therefore, if OOK is used for signal modulation, each symbol carries information about one bit, the time length of each symbol is relatively long, and therefore the transmission rate is very low.

5 OFDM

OFDM is a widely used modulation technology. OFDM mainly divides a system bandwidth into a plurality of parallel subcarriers, and separately modulates data on each subcarrier for sending.

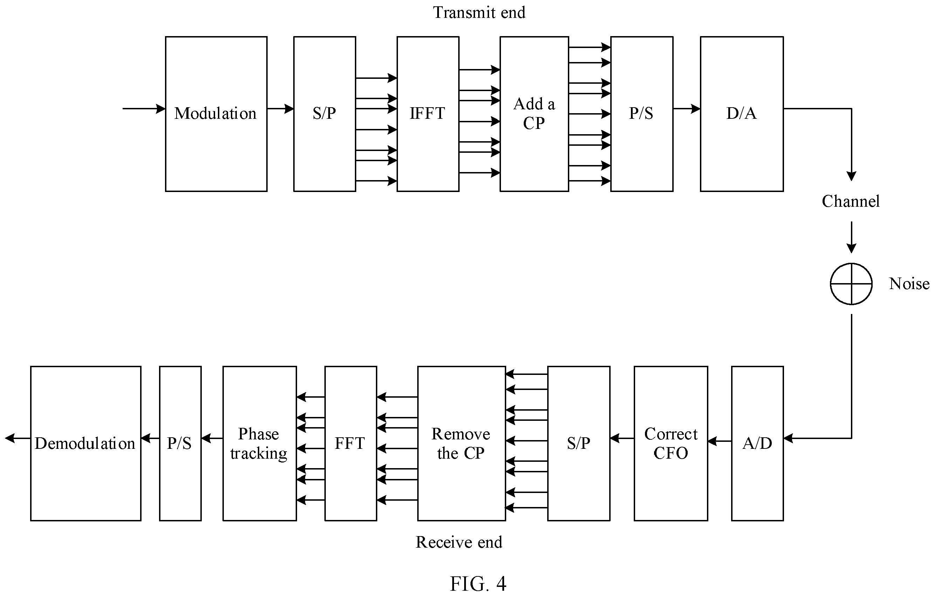

In an example, FIG. 4 is a schematic diagram of sending a signal and receiving the signal by using an OFDM modulation technology.

As shown in FIG. 4, a process of sending a signal by a transmit end may include the following steps. Modulation (modulation) is performed on an encoded bit stream, to obtain a plurality of symbols. A modulation scheme for modulating the encoded bit stream may be, for example, quadrature amplitude modulation (quadrature amplitude modulation, QAM), and the obtained symbol is, for example, a QAM symbol. Serial/Parallel (serial/parallel, S/P) conversion is performed on the symbol obtained through modulation, and symbols obtained through S/P processing are mapped to different subcarriers, respectively. An inverse fast Fourier transform (inverse fast Fourier transform, IFFT) operation is performed on the symbol on different subcarriers. A cyclic prefix (cyclic prefix, CP) is added to the symbol that undergoes the IFFT, and after parallel/serial (parallel/serial, P/S) conversion and digital-to-analog (D/A) conversion, the symbol is transmitted to a channel (channel).

As shown in FIG. 4, a process of receiving the signal by the receive end may include the following steps. Analog-to-digital (A/D) conversion is performed on the received signal, correct carrier frequency offset (carrier frequency offset, CFO) (correct CFO) is performed, then S/P conversion is performed, and the CP is removed. A fast Fourier transform (fast Fourier transform, FFT) operation is performed on the signal obtained by removing the CP, then phase tracking (phase tracking) is performed, P/S conversion is performed, and finally demodulation is performed.

It may be understood that the specific procedure of sending a signal and receiving the signal is an example for description. This is not limited.

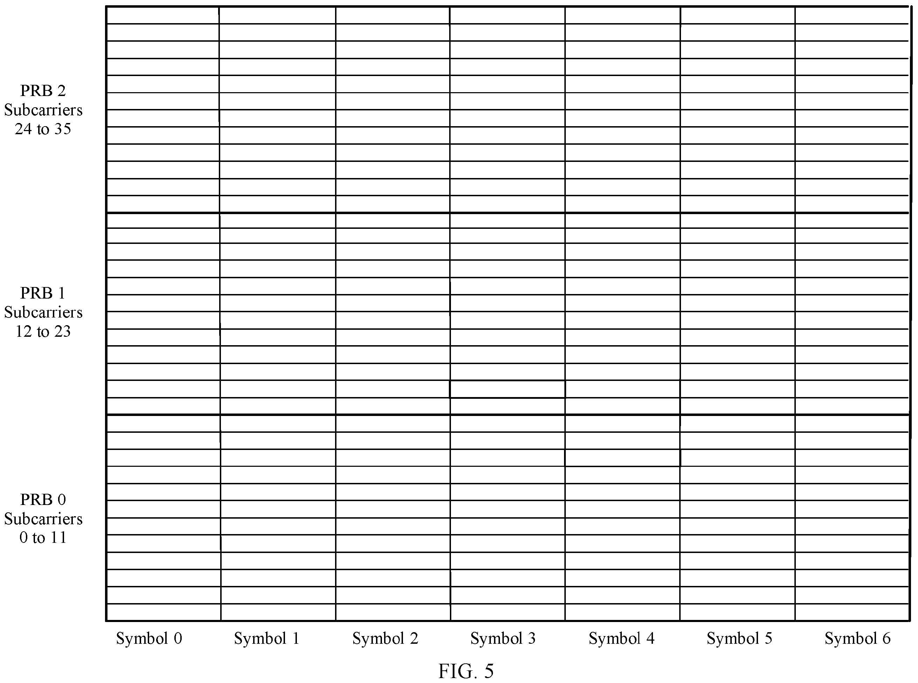

OFDM modulation actually means that spectrum resources of a system are divided into two-dimensional time-frequency grids. In an example, FIG. 5 is a schematic diagram of spectrum resource division of OFDM modulation. As shown in FIG. 5, in a time domain dimension, division is performed in a granularity of an OFDM symbol (OFDM symbol). In a frequency dimension, division is performed in a granularity of a subcarrier. In each OFDM symbol, one QAM signal may be transmitted on each subcarrier. In some systems, for example, in LTE and NR systems, one physical resource block (physical resource block, PRB) may include a plurality of subcarriers. For example, one PRB includes 12 subcarriers. As shown in FIG. 5, a PRB 0 includes subcarriers 0 to 11, a PRB 1 includes subcarriers 12 to 23, and a PRB 2 includes subcarriers 24 to 35.

OFDM modulation may use different subcarrier spacings (sub-carrier spaces, SCSs). Usually, when an operating frequency band is relatively high, a multipath delay of wireless transmission is relatively small, and phase noise of a device is relatively large. In this case, a large subcarrier spacing is more suitable. When an operating frequency band is relatively low, a multipath delay is abundant, and phase noise of a device is relatively small. In this case, a small subcarrier spacing is more suitable.

To adapt to different deployment conditions, a plurality of optional subcarrier spacings are defined in some communication systems for selection during actual deployment. For example, in a 5G NR system, a plurality of subcarrier spacings are defined, including 15 kHz, 30 kHz, 60 kHz, 120 kHz, and 240 kHz.

In some communication systems, for example, in a 5G NR system, an operating frequency of the system is divided into two frequency ranges (frequency ranges, FRs): an FR 1 (410 MHz to 7.125 GHz) and an FR 2 (24.25 GHz to 52.6 GHz). A frequency band of the FR 1 is lower than that of the FR 2. The FR 2 works on a relatively high frequency band, which is usually referred to as a millimeter wave frequency band. A frequency band used in conventional cellular wireless communication usually is the FR 1. In a 5G system, a frequency band used in some small coverage scenarios may include the FR 2.

As described above, a large subcarrier spacing is applicable to deployment on a high frequency, and a small subcarrier spacing is applicable to deployment on a low frequency. Therefore, usually, subcarrier spacings that can be used in the FR 1 include 15 kHz, 30 kHz, and 60 kHz, and subcarrier spacings that can be used in the FR 2 include 60 kHz, 120 kHz, and 240 kHz.

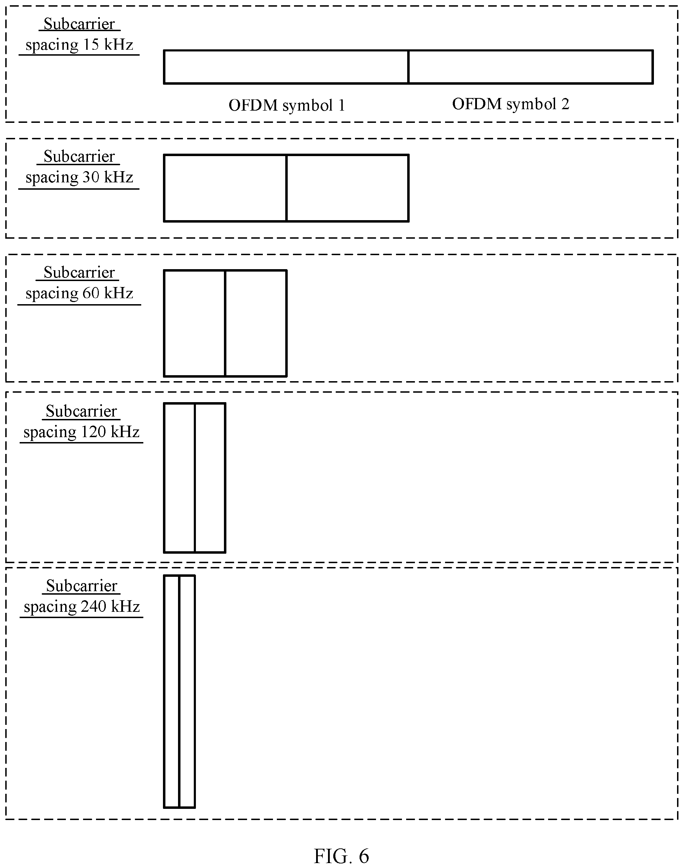

It may be understood that, when a subcarrier spacing becomes wider, a time length of the OFDM symbol becomes shorter. In an example, FIG. 6 is a schematic diagram of time domain and frequency domain resources of OFDM corresponding to different subcarrier spacings. As shown in FIG. 6, when the subcarrier spacing is widened from 15 kHz to 30 kHz, the time length of the OFDM symbol becomes half of an original time length.

The OFDM technology requires relatively high complexity for the receiver. From a perspective of power saving, the OFDM technology is not an optimal choice for the wake-up circuit.

6. OOK modulation technology based on an OFDM transmitter

An OOK modulation technology based on an OFDM transmitter means that an OOK signal is generated based on the OFDM transmitter. Specifically, the OFDM transmitter is used to modulate a signal. Some OFDM symbols are used to modulate and send a signal on a subcarrier. Such OFDM symbols represent "ON" (that is, represent "1" in the OOK signal, or a signal transmit power in the symbol length is not 0, or a signal is sent in the symbol length). Some OFDM symbols are not used to send a signal on a subcarrier, and such OFDM symbols represent "OFF". (that is, represent "0" in the OOK signal, or a signal transmit power in the symbol length is 0, or no signal is sent in the symbol length).

In embodiments of this application, the OOK signal may be generated based on the OFDM transmitter, so that not only power consumption of the wake-up circuit can be reduced, but also complexity of the transmitter can be reduced.

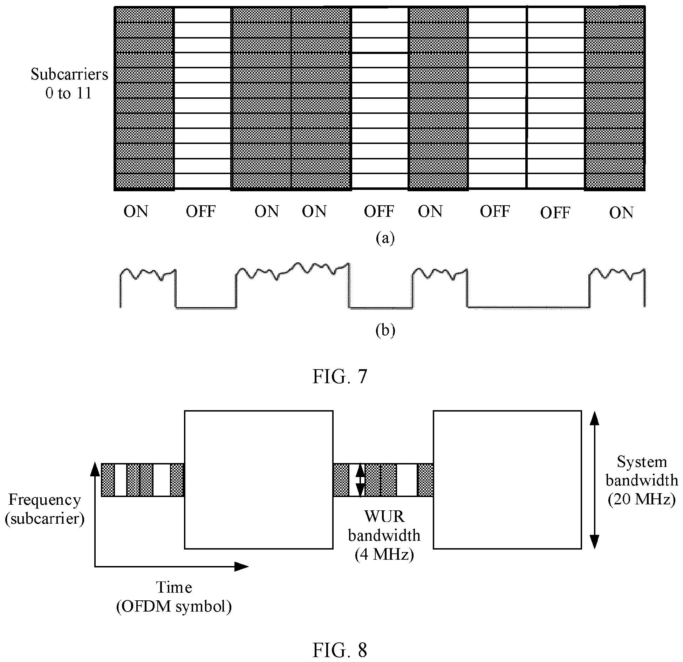

In an example, FIG. 7 is a schematic diagram of an OOK signal generated based on an OFDM transmitter. As shown in FIG. 7, some OFDM symbols are used to modulate and send a signal on a subcarrier, and such OFDM symbols represent "ON"; and some OFDM symbols are not used to send a signal, and such OFDM symbols represent "OFF". For example, OFDM symbols in a shadow part in (a) in FIG. 7 are used to modulate a signal on 12 subcarriers. After inverse fast Fourier transform (inverse fast Fourier transform, IFFT) is performed, an OFDM signal is obtained and is normally sent. For another example, OFDM symbols in a white part in (a) in FIG. 7 are not used to send a signal. In this case, (b) in FIG. 7 shows a time domain waveform obtained by the receive end. In this way, although the signal is generated by the OFDM transmitter, the receiver may perform demodulation based on the OOK signal.

The foregoing is an example for description. This is not limited in this application.

If the first signal and the second signal are sent in a time division manner, spectrum resources may be wasted. FIG. 8 is a schematic diagram of sending a first signal and a second signal in a time division manner. As shown in FIG. 8, the transmit end may send the first signal, and send the second signal after the main circuit is woken up. A relatively small amount of information needs to be transmitted on the wake-up circuit. In addition, to achieve energy saving, a relatively narrow bandwidth (for example, a bandwidth of 4 MHz) may be used. A large amount of data may be transmitted on the main circuit, and therefore a relatively wide bandwidth (for example, a bandwidth of 20 MHz) may be occupied.

As shown in FIG. 8, only a relatively narrow bandwidth is used in a time for sending the first signal. For example, a WUR bandwidth in FIG. 8 is a bandwidth of 4 MHz. A system bandwidth is 20 MHz. Therefore, in the time for sending the first signal, most of the system bandwidth is not used, causing a great waste of spectrum resources.

In view of this, this application provides a solution, to resolve a problem of the spectrum resource waste caused when the first signal and the second signal are sent in the time division manner.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification usually indicates an "or" relationship between the associated objects.

It may be further understood that the length mentioned in this specification, for example, a length of a CP and a length of a symbol, are both time lengths. For example, a unit of the length (namely, the time length) mentioned in this specification is $T_c$ = 1/(4096·480·10³) seconds. For another example, the time length may alternatively be represented by a quantity of time domain sampling points. This is not limited.

The foregoing briefly describes the terms used in this application, and details are not described in the following embodiments.

The following describes in detail a signal transmission method provided in embodiments of this application with reference to the accompanying drawings. Embodiments provided in this application may be applied to the network architecture shown in FIG. 1. This is not limited.

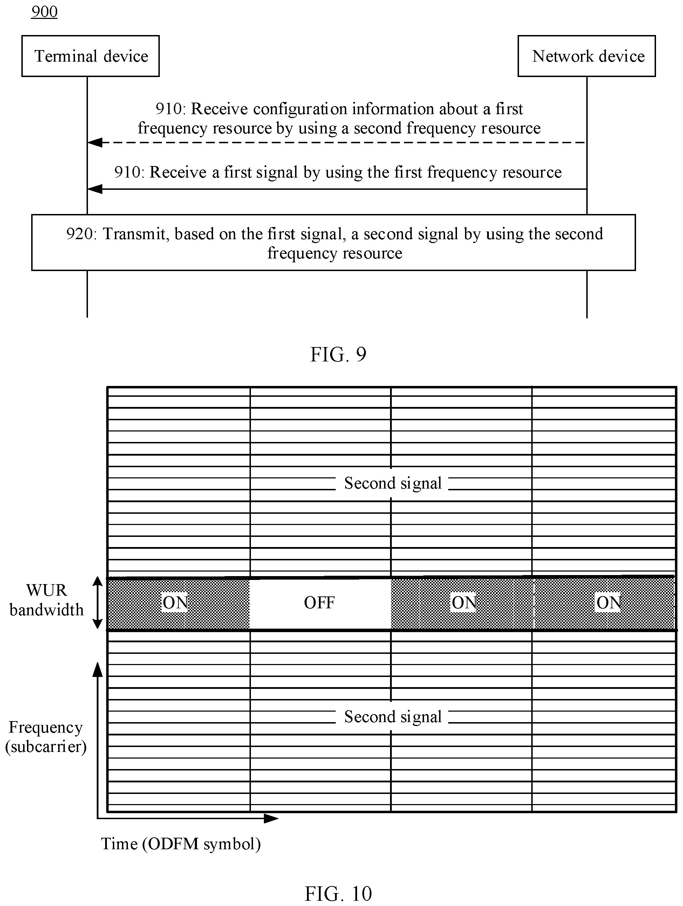

FIG. 9 is a schematic diagram of a signal transmission method 900 according to an embodiment of this application. An interaction between a terminal device and a network device is used as an example. The method 900 may include the following steps.

910: The terminal device receives a first signal from the network device by using a first frequency resource.

In step 910, that the terminal device receives a first signal from the network device by using a first frequency resource may be replaced with any one of the following: The terminal device receives the first signal from the network device via a first module, the terminal device receives the first signal from the network device on a first link, the terminal device receives the first signal from the network device when the terminal device is in a first state, and the terminal device receives the first signal from the network device when the terminal device is in a first mode.

920: The terminal device transmits, based on the first signal, a second signal with the network device by using a second frequency resource.

"Based on the first signal" may be, for example, replaced with "in response to the first signal". In step 920, that the terminal device transmits, based on the first signal, a second signal with the network device by using a second frequency resource may be understood as that the terminal device transmits the second signal with the network device by using the second frequency resource in response to the first signal. FIG. 2 is used as an example. For example, after the terminal device receives (or detects) the first signal by using the first frequency resource, the terminal device transmits the second signal with the network device by using the second frequency resource.

In step 920, that the terminal device transmits a second signal with the network device by using a second frequency resource may be replaced with any one of the following: The terminal device transmits the second signal with the network device via a second module, the terminal device transmits the second signal with the network device on a second link, the terminal device transmits the second signal with the network device when the terminal device is in a second state, and the terminal device transmits the second signal with the network device when the terminal device is in a second mode.

The first signal indicates a signal transmitted by using the first frequency resource (or a signal transmitted via a wake-up circuit), and the second signal indicates a signal transmitted by using the second frequency resource (or a signal transmitted via a main circuit).

In a possible case, in step 920, that the terminal device transmits, based on the first signal, a second signal with the network device by using a second frequency resource includes: In response to the first signal, the terminal device initiates random access to the network device by using the second frequency resource. The second signal may indicate a signal in a random access procedure of the terminal device. For example, the second signal includes a random access preamble sequence. In this case, that the terminal device transmits a second signal with the network device by using a second frequency resource may be replaced with the following description: The terminal device sends the second signal to the network device by using the second frequency resource.

In another possible case, in step 920, that the terminal device transmits, based on the first signal, a second signal with the network device by using a second frequency resource includes: In response to the first signal, the terminal device receives paging from the network device by using the second frequency resource. The second signal may carry, for example, one or more pieces of the following information: a PEI, paging DCI, and a paging message (such as a paging PDCCH and a paging PDSCH). In this case, that the terminal device transmits a second signal with the network device by using a second frequency resource may be replaced with the following description: The terminal device receives, by using the second frequency resource, the second signal sent by the network device.

For the first signal and the second signal, refer to the foregoing descriptions. Details are not described herein again.

The first frequency resource and the second frequency resource are different frequency domain resources in a system bandwidth.

The first link and the second link are used as an example. For example, it is assumed that the system bandwidth is F. In this case, a part of the frequency bandwidth (for example, denoted as F1) may be allocated to the first link for use, and a remaining part of the frequency bandwidth (that is, F-F1) may be allocated to the second link for use. That the first frequency resource is different from the second frequency resource indicates that the second link does not use a frequency domain resource of F1.

FIG. 10 is a schematic diagram of a signal transmitted on a first link and a second link according to an embodiment of this application.

As shown in FIG. 10, some subcarriers (for example, a WUR bandwidth in FIG. 10) in the system bandwidth are allocated to the first link for use, and the remaining subcarriers are allocated to the second link for use, to transmit the second signal. Among some subcarriers in the WUR bandwidth, some OFDM symbols are used to modulate and send a signal on a subcarrier, and such OFDM symbols represent "ON"; and some OFDM symbols are not used to send a signal, and such OFDM symbols represent "OFF". For example, the network device sends the first signal to a first terminal device on the first link by using a subcarrier of the WUR bandwidth, and the network device transmits a signal (for example, transmits the second signal) with another terminal device (for example, a second terminal device) on the second link by using a remaining subcarrier.

Optionally, before step 910, the method 900 further includes step 901.

901: The terminal device receives configuration information about the first frequency resource by using the second frequency resource.

In step 901, that the terminal device receives configuration information about the first frequency resource by using the second frequency resource may be replaced with any one of the following: The terminal device receives the configuration information about the first frequency resource via the second module; the terminal device receives the configuration information about the first frequency resource on the second link; the terminal device receives the configuration information about the first frequency resource when the terminal device is in the second state; and the terminal device receives the configuration information about the first frequency resource when the terminal device is in the second mode.

Before using the first link, the network device and the terminal device may determine the configuration information about the first frequency resource. For example, the configuration information about the first frequency resource may be determined in a protocol, or may be configured by the network device and then sent to the terminal device.

For example, the configuration information about the first frequency resource includes one or more pieces of the following information: a bandwidth of the first frequency resource, frequency domain positions of the first frequency resource, and a subcarrier spacing of the first frequency resource.

The bandwidth of the first frequency resource indicates a bandwidth used by the first link or a bandwidth occupied by the first link. For example, the bandwidth of the first frequency resource is a width of $N_{wur,rb}$ PRBs, where $N_{wur,rb}$ is an integer greater than 1 or equal to 1. For example, $N_{wur,rb}$ is 2. For another example, $N_{wur,rb}$ is 3.

The frequency domain positions of the first frequency resource indicate a frequency domain position used by the first link. For example, the frequency domain positions of the first frequency resource include a position of a resource block (resource block, RB).

For example, the frequency domain positions of the first frequency resource may include a start position of an RB and a quantity of RBs. The terminal device may determine a position of an RB based on the start position of the RB and the quantity of RBs, to learn the frequency domain positions of the first frequency resource.

For another example, the frequency domain positions of the first frequency resource include a start position of an RB. A quantity of RBs may be pre-agreed, or may be preconfigured by a network side. This is not limited. The terminal device may determine a position of an RB based on the start position of the RB, to learn the frequency domain positions of the first frequency resource.

The subcarrier spacing of the first frequency resource indicates a subcarrier spacing used by the first link or a symbol length of the first signal.

Optionally, the subcarrier spacing of the first frequency resource is different from a subcarrier spacing of the second frequency resource.

For example, the subcarrier spacing of the first frequency resource is greater than the subcarrier spacing of the second frequency resource.

As described above, the subcarrier spacings that can be used in the FR 1 include 15 kHz, 30 kHz, and 60 kHz, and the subcarrier spacings that can be used in the FR 2 include 60 kHz, 120 kHz, and 240 kHz. In embodiments of this application, if the first link is deployed in the FR 1, in an example, the first link may use a subcarrier spacing of the FR 2, that is, subcarrier spacings of the first frequency resource may include 60 kHz, 120 kHz, and 240 kHz, to improve a transmission rate of the first link. The transmission rate indicates a data transfer rate (data transfer rate).

Specifically, the transmission rate is affected by a time length of an OFDM symbol. The time length of the OFDM symbol is related to a subcarrier spacing. A smaller subcarrier spacing indicates a longer time length of the OFDM symbol. In this case, a transmission rate of an OOK signal generated by using an OFDM transmitter is lower. A relatively small subcarrier spacing is usually used on a relatively low frequency band (for example, the FR 1). In this case, a transmission rate also becomes lower. For example, if a cell deployed on the FR 1 uses a subcarrier spacing of 30 kHz, a time length of one OFDM symbol is about 33.33 μs. In consideration of overheads (overheads) caused by a cyclic prefix, a maximum transmission rate that can be achieved by using OOK modulation may be 28 kilobits per second (kbps). In many cases, the transmission rate cannot support a traffic volume of the first signal in the cell. Therefore, the first link may use the subcarrier spacing originally used for the FR 2, that is, a subcarrier spacing of the first link is increased, so that the transmission rate of the first link can be increased.

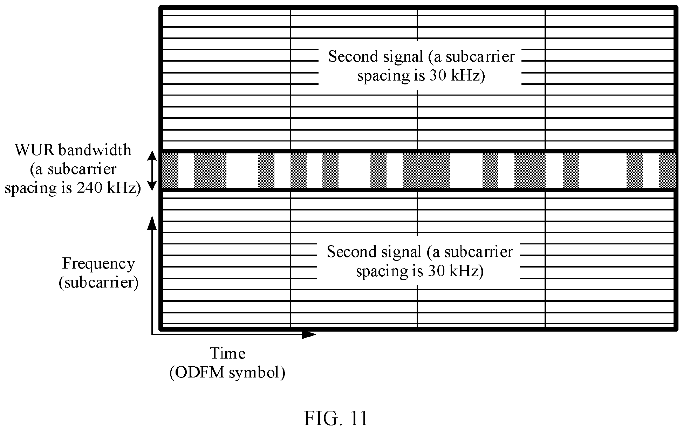

In an example, FIG. 11 is a schematic diagram of using different subcarrier spacings for the first link and the second link according to an embodiment of this application.

As shown in FIG. 11, a subcarrier spacing for transmitting the first signal is 240 kHz, and a subcarrier spacing for transmitting the second signal is 30 kHz. Compared with a subcarrier spacing of 30 kHz, for an OFDM symbol of a subcarrier spacing of 240 kHz, the subcarrier spacing is increased by eight times, a corresponding length of the OFDM symbol is shortened by eight times, and a transmission rate of the first link may be increased by eight times. For example, the transmission rate of the first link may be increased from 28 kbps to 224 kbps. It can also be learned from FIG. 11 that, in a time range of one OFDM symbol of the second signal, the first signal may be transmitted on eight symbols. Therefore, a transmission rate is greatly improved.

Optionally, time for the terminal device to demodulate the first signal by using the first frequency resource is related to a preset interval, and the preset interval is different from a length of a cyclic prefix corresponding to the subcarrier spacing of the first frequency resource.

In a possible implementation, from a start moment of each receive symbol, the terminal device demodulates the first signal from the network device by using the first frequency resource after the preset interval.

The subcarrier spacing may correspond to a cyclic prefix of a specific length. In other words, there is a correspondence between each subcarrier spacing and a length of a cyclic prefix. If a relatively large subcarrier spacing is used, a length of a cyclic prefix corresponding to the relatively large subcarrier spacing is relatively short. In some communication systems, for example, in an OFDM communication system, a cyclic prefix is used to resist inter-symbol interference caused by a multipath delay. If a relatively large subcarrier spacing is used for the first frequency resource, a cyclic prefix corresponding to the relatively large subcarrier spacing may be unable to resist inter-symbol interference caused by a multipath delay of a channel. Therefore, embodiments of this application provide the preset interval, to address, based on the preset interval, impact of the multipath delay that may be encountered when the first link uses the relatively large subcarrier spacing. The preset interval, for example, may also be referred to as a guard interval, for example, denoted as an inter-symbol interference guard interval (inter-symbol interference guard interval, ISI-GI). A name of the preset interval does not constitute a limitation on the protection scope of this application. The following uses the preset interval for a uniform description. The following describes the foregoing solution in detail.

Usually, a subcarrier spacing may be set and a guard interval (such as a CP) may be added between symbols to resist inter-symbol interference (inter-symbol interference, ISI) caused by a multipath delay of a channel. For example, if the multipath delay of the channel is relatively large, a relatively small subcarrier spacing may be used. In this case, a length of a symbol is greater than the multipath delay of the channel. Then, a CP is added before an OFDM symbol, and a length of the CP exceeds a length of the multipath delay. In this way, after the CP is removed at a receive end, inter-symbol interference caused by the multipath delay can be avoided.

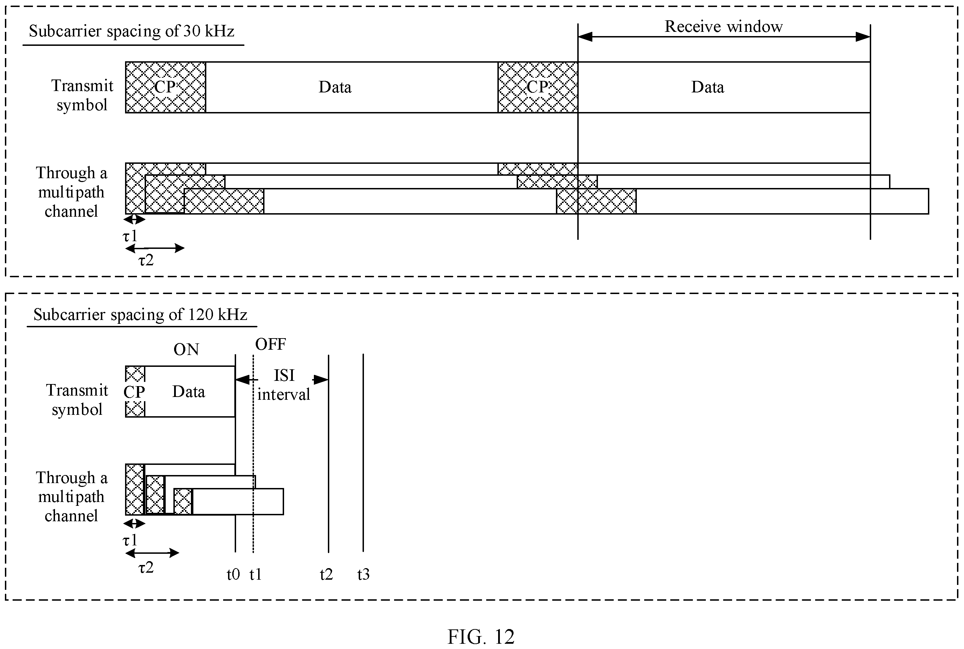

In an example, FIG. 12 is a schematic diagram of a multipath delay and an ISI interval.

As shown in FIG. 12, for a time domain diagram of a transmit symbol (namely, an OFDM symbol) corresponding to a subcarrier spacing of 30 kHz, the transmit symbol includes a CP and data. After the transmit symbol passes through a multipath channel, due to the CP, in a receive window of the receive end, the received symbol is not interfered by a previous symbol. A receiver processes data in the receive window to avoid impact of ISI.

For the first link, a relatively large subcarrier spacing may be used, to increase a transmission rate. However, the relatively large subcarrier spacing may be affected by the multipath delay. As shown in FIG. 12, for a time domain diagram of a transmit symbol corresponding to a subcarrier spacing of 120 kHz, a first transmit symbol represents "ON", that is, a signal is sent on the first transmit symbol, and a second transmit symbol represents "OFF", that is, no signal is sent on the second transmit symbol. Under a same multipath delay condition, if the subcarrier spacing of the first link is set to 120 kHz, the subcarrier spacing is increased by four times compared with 30 kHz, a time length of a transmit symbol is shortened to 1/4 of an original time length, and a corresponding CP length is also shortened to 1/4 of an original length. In this case, for a same multipath delay, a length of the CP may be shorter than a length of the multipath delay. An interval (t1-t0) in FIG. 12 is a length of the CP corresponding to the subcarrier spacing of 120 kHz. A delay τ2 of a second path in a multipath exceeds the length of the CP. In this case, if time after the CP is removed is still used as a receive time window (that is, time from t1 to t3), inter-symbol interference ISI caused by a previous symbol occurs. Therefore, embodiments of this application provide the preset interval, to address impact of the multipath delay that may be encountered when the first link uses the relatively large subcarrier spacing.

The preset interval means a specific time length, and a length of the preset interval should exceed an impact interval of inter-symbol interference caused by the multipath delay. The length of the preset interval is different from a length of a CP corresponding to the subcarrier spacing of the first frequency resource. For example, the length of the preset interval may be equal to a length of a CP corresponding to transmission of the second signal. For example, in FIG. 12, the length of the preset interval may be selected as a length of a CP corresponding to a subcarrier spacing of 30 kHz, and is different from a length of a CP corresponding to a subcarrier width (120 kHz) of the second signal. The preset interval may be excluded from the time window of the receive end. For example, in FIG. 12, the symbol is received from a moment t2, and the preset interval is time from t0 to t2, that is, an interval of a CP corresponding to a subcarrier spacing of 30 kHz. The receive end may use time from t2 to t3 as the receive time window, that is, start to demodulate the first signal from the moment t2.

The preset interval may be predefined in a standard, or may be configured by a network side. If the preset interval is configured by the network side, the network side may send the configured preset interval to the terminal device.

In a possible design, the network side configures the preset interval, and sends the preset interval to the terminal device. For example, the preset interval may be carried in other information and sent to the terminal device, for example, carried in the configuration information about the first frequency resource; or the preset interval may be separately sent to the terminal device.

In another possible design, an association relationship between the preset interval and other information is configured by the network side or predefined in a standard, and the preset interval may be determined based on the other information and the association relationship. The following provides several possible solutions.

Solution 1: The preset interval is associated with a frequency band on which the first signal is located. For differentiation, the association relationship may be denoted as an association relationship #1. The association relationship #1 may be predefined, or may be predefined in a standard, or may be configured by a network side. If the association relationship #1 is configured by the network side, the network side may send the association relationship #1 to the terminal device.

Based on Solution 1, the network device may indicate, to the terminal device, the frequency band on which the first signal is located, so that the terminal device may determine, based on the frequency band on which the first signal is located and the association relationship #1, a length of the preset interval corresponding to the first signal.

In an example, the association relationship #1 may exist in a form of Table 1.

**Table 1**

| Frequency band (band) | Length of the preset interval (unit: $\mu$s) |
|---|---|
| Band 1 | n1 |
| Band 2 | n2 |
| Band 3 | n3 |

Table 1 is used as an example. For example, if the frequency band on which the first signal is located is a band 1, the length of the preset interval corresponding to the first signal is n1 $\mu$s. If the frequency band on which the first signal is located is a band 2, the length of the preset interval corresponding to the first signal is n2 $\mu$s. If the frequency band on which the first signal is located is a band 3, the length of the preset interval corresponding to the first signal is n3 $\mu$s.

It should be understood that Table 1 is merely an example for description. This is not limited. Any variation of Table 1 is applicable to this application. For example, the frequency band may further include a larger quantity of frequency bands, and correspondingly, the length of the preset interval may include a larger quantity of lengths. For another example, the frequency band may be a specific value, or may be a range. For example, the band 1 may be a value, or the band 1 may be a range.

Solution 2: The preset interval is associated with a CP length of a bandwidth part (bandwidth part, BWP). The BWP may be, for example, a specific BWP such as an initial BWP (initial BWP). For differentiation, the association relationship may be denoted as an association relationship #2. The association relationship #2 may be predefined, or may be predefined in a standard, or may be configured by a network side. If the association relationship #2 is configured by the network side, the network side may send the association relationship #2 to the terminal device.

Based on Solution 2, the initial BWP is used as an example. When reading system information, the terminal device may obtain, from the system information, a subcarrier spacing used for the initial BWP. In this way, the terminal device may calculate a CP length used for the initial BWP, and the terminal device may determine, based on the CP length used for the initial BWP and the association relationship #2, a length of the preset interval corresponding to the first signal.

The initial BWP is used as an example. The association relationship #2 may exist in a form of Table 2.

**Table 2**

| CP length used for the initial BWP | Length of the preset interval (unit: μs) |
|---|---|
| CP 1 | n1' |
| CP 2 | n2' |
| CP 3 | n3' |

Table 2 is used as an example. For example, if the CP length used for the initial BWP is a CP 1, the length of the preset interval corresponding to the first signal is n1' μs. If the CP length used for the initial BWP is a CP 2, the length of the preset interval corresponding to the first signal is n2' μs. If the CP length used for the initial BWP is a CP 3, the length of the preset interval corresponding to the first signal is n3' μs.

It should be understood that Table 2 is merely an example for description. This is not limited. Any variation of Table 2 is applicable to this application. For example, the CP length used for the initial BWP may further include a larger quantity of CP lengths, and correspondingly, the length of the preset interval may include a larger quantity of lengths. For another example, the initial BWP may be alternatively replaced with another BWP.

Solution 3: The preset interval is associated with the subcarrier spacing of the first frequency resource. For differentiation, the association relationship may be denoted as an association relationship #3. The association relationship #3 may be predefined, or may be predefined in a standard, or may be configured by a network side. If the association relationship #3 is configured by the network side, the network side may send the association relationship #3 to the terminal device.

Based on Solution 3, the network device may indicate the subcarrier spacing of the first signal to the terminal device, so that the terminal device may determine, based on the subcarrier spacing of the first signal and the association relationship #3, a length of the guard interval corresponding to the first signal.

In an example, the association relationship #3 may exist in a form of Table 3.

**Table 3**

| Subcarrier spacing (unit: kHz) | Length of the guard interval (unit: μs) |
|---|---|
| 60 | n1" |
| 120 | n2" |
| 240 | n3" |

Table 3 is used as an example. For example, if the subcarrier spacing of the first signal is 60 kHz, the length of the guard interval corresponding to the first signal is n1" μs. If the subcarrier spacing of the first signal is 120 kHz, the length of the guard interval corresponding to the first signal is n2" μs. If the subcarrier spacing of the first signal is 240 kHz, the length of the guard interval corresponding to the first signal is n3" μs.

It should be understood that Table 3 is merely an example for description. This is not limited. Any variation of Table 3 is applicable to this application. For example, the subcarrier spacing may further include a larger quantity of values, and correspondingly, the length of the guard interval may include a larger quantity of lengths.

In embodiments of this application, inter-subcarrier interference between the first signal and the second signal may be reduced by using a guard subcarrier or in a time domain windowing manner.

In a case in which the subcarrier spacing of the first frequency resource is different from the subcarrier spacing of the second frequency resource, orthogonality between the first signal and the second signal may be damaged. In this case, inter-subcarrier interference may exist between the first signal and the second signal. The orthogonality may mean that no mutual interference exists between subcarriers under an ideal time-frequency synchronization condition.

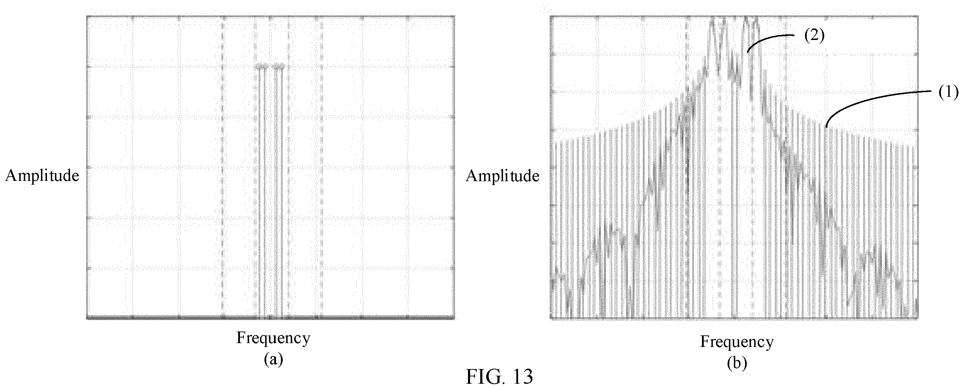

In an example, FIG. 13 is a schematic diagram in which no interference exists and interference exists between subcarriers.

As shown in (a) in FIG. 13, it is assumed that the first signal is modulated by using four subcarriers, and a subcarrier spacing used for the first signal is the same as that used for the second signal on a neighboring frequency band (for example, both are 30 kHz). In this case, after an FFT operation is performed, energy of the first signal is concentrated on the subcarrier for modulation, and does not leak to an adjacent subcarrier. As shown by a line (1) in (b) in FIG. 13, it is assumed that a subcarrier spacing used for the first signal is different from a subcarrier spacing used for the second signal on a neighboring frequency band (for example, the subcarrier spacing used for the first signal is 30 kHz, and the subcarrier spacing used for the second signal is 60 kHz). In this case, after an FFT operation is performed, energy of the first signal leaks to an adjacent subcarrier, and inter-subcarrier orthogonality is destroyed.

Therefore, in embodiments of this application, inter-subcarrier interference between the first signal and the second signal may be reduced by using a guard subcarrier or in a time domain windowing manner. The following describes the two manners.

Manner 1: The guard subcarrier is used to reduce inter-subcarrier interference.

Example 1: The terminal device receives the first signal from the network device by using a subcarrier other than N1 subcarriers in the first frequency resource, where N1 is an integer greater than 1 or equal to 1.

Based on Example 1, when the first signal is transmitted on the first link, the subcarrier other than the N1 subcarriers in the first frequency resource is used to transmit the first signal. It may be understood that N1 is less than a total quantity of subcarriers of the first frequency resource, or that N1 is less than a total quantity of subcarriers of a bandwidth used by the first link. In an example, N1 may be 1 or 2.

The N1 subcarriers may be understood as a guard subcarrier or an edge subcarrier. The N1 subcarriers indicate one or more subcarriers that are in the first frequency resource and that are adjacent to the second frequency resource. The N1 subcarriers may include one or more subcarriers with a largest number/largest numbers (or referred to as an index or a sequence number) and/or one or more subcarriers with a smallest number/smallest numbers in a bandwidth of the first link (namely, a bandwidth of the first frequency resource). The guard subcarrier is set on one side or two sides of the bandwidth allocated to the first link, and the first signal is not transmitted on the guard subcarrier. In this way, even if the subcarrier spacing of the first frequency resource is different from the subcarrier spacing of the second frequency resource, subcarrier interference between the first signal transmitted by using the first frequency resource and the second signal transmitted by using the second frequency resource is still greatly reduced because of the guard sub carri er.

It is assumed that the first frequency resource includes a bandwidth used by the first link, and the bandwidth used by the first link includes N subcarriers, where N is an integer greater than N1. That the terminal device receives the first signal from the network device by using a subcarrier other than N1 subcarriers in the first frequency resource may be replaced with that the terminal device receives the first signal from the network device by using one or more intermediate subcarriers of the N subcarriers, or that the terminal device can receive the first signal by using a frequency resource on the one or more intermediate subcarriers of the N subcarriers. In an example, the terminal device receives the first signal from the network device by using N3 intermediate subcarriers in the N subcarriers, where N3 is an integer greater than 1 or equal to 1, and N3 is less than N.

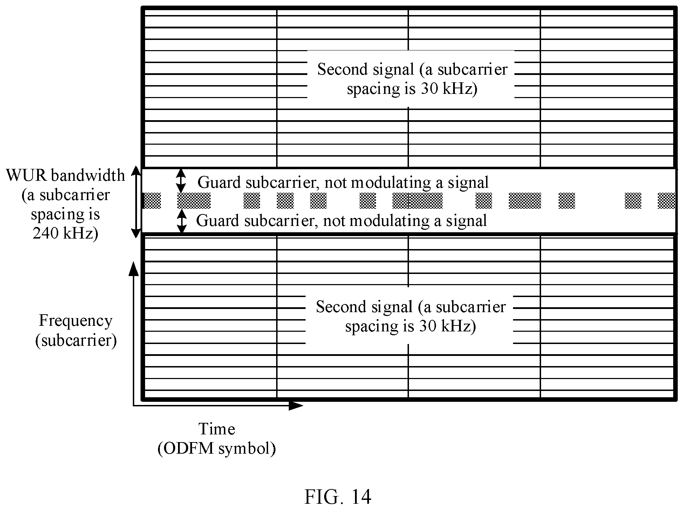

For example, the N1 subcarriers include one or more subcarriers with a largest number/largest numbers in the N subcarriers, and one or more subcarriers with a smallest number/smallest numbers in the N subcarriers. In this way, the guard subcarrier is set on two sides of the bandwidth allocated to the first link, the first signal is not transmitted on the guard subcarrier, and the guard subcarrier may be used as a guard interval between the first signal and the second signal, thereby reducing subcarrier interference between the first signal and the second signal. FIG. 14 is a schematic diagram in which inter-subcarrier interference is reduced by using a guard subcarrier according to an embodiment of this application.

As shown in FIG. 14, a bandwidth of the first link (namely, a WUR bandwidth in FIG. 14) is $N_{wur,rb}$ PRBs, corresponding to $N_{wur,rb} \times 12$ subcarriers. A guard subcarrier is set on two sides of the bandwidth of the first link, no signal is transmitted on the guard subcarrier, and the guard subcarrier is used as a guard interval between the first signal and the second signal. The first signal is modulated on N3 intermediate subcarriers, where N3 may be 1, or may be greater than 1. In this way, even if the subcarrier spacing of the first frequency resource is different from the subcarrier spacing of the second frequency resource, subcarrier interference between the first signal transmitted by using the first frequency resource and the second signal transmitted by using the second frequency resource is still greatly reduced because of the guard subcarrier.

Example 2: The terminal device transmits the second signal with the network device by using a subcarrier other than N2 subcarriers in the second frequency resource, where N2 is an integer greater than 1 or equal to 1.

Based on Example 2, when the second signal is transmitted on the second link, the subcarrier other than the N2 subcarriers in the second frequency resource is used to transmit the second signal. It may be understood that N2 is less than a total quantity of subcarriers of the second frequency resource, or that N2 is less than a total quantity of subcarriers of a bandwidth used by the second link. In an example, N2 may be 1 or 2.

The N2 subcarriers may be understood as a guard subcarrier or an edge subcarrier. The N2 subcarriers indicate one or more subcarriers that are in the second frequency resource and that are adjacent to the first frequency resource. The guard subcarrier is set on one side or two sides of the bandwidth allocated to the second link, and the second signal is not transmitted on the guard subcarrier. In this way, even if the subcarrier spacing of the first frequency resource is different from the subcarrier spacing of the second frequency resource, subcarrier interference between the first signal transmitted by using the first frequency resource and the second signal transmitted by using the second frequency resource is still greatly reduced because of the guard subcarrier.

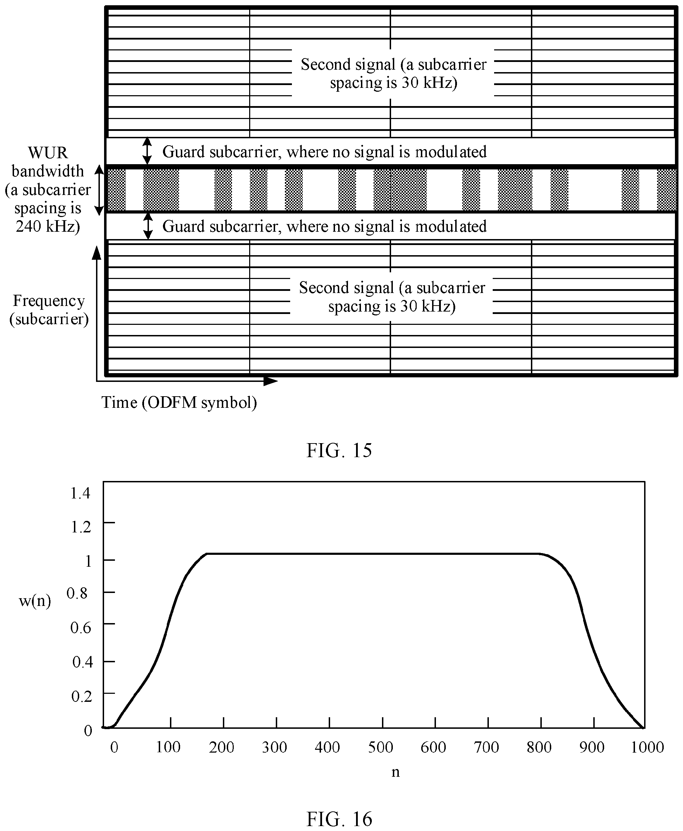

FIG. 15 is another schematic diagram in which inter-subcarrier interference is reduced by using a guard sub-carrier according to an embodiment of this application.

As shown in FIG. 15, a guard subcarrier is set at a bandwidth adjacent to the second link and the first link, no signal is transmitted on the guard subcarrier, and the guard subcarrier is used as a guard interval between the first signal and the second signal. In this way, even if the subcarrier spacing of the first frequency resource is different from the subcarrier spacing of the second frequency resource, subcarrier interference between the first signal transmitted by using the first frequency resource and the second signal transmitted by using the second frequency resource is still greatly reduced because of the guard subcarrier.

The foregoing mainly describes Manner 1, and the following describes Manner 2.

Manner 2: time domain windowing.

Optionally, the first signal is a signal obtained by multiplying a time domain signal by a window function. Time domain windowing indicates that a windowed signal is obtained by multiplying an OFDM symbol by a window function.

In embodiments of this application, after the first signal is modulated through FFT and converted into a time domain signal, the time domain signal is multiplied by a time domain window function for sending. In this way, subcarrier interference between the first signal and the second signal can be reduced in the time domain windowing manner.

The window function may indicate, for example, a function whose values at both ends are relatively small and whose intermediate values are relatively large. In an example, the window function is, for example, a raised cosine window, a Hamming (Hamming) window, a Hanning (Hanning) window, or a Gaussian window. The following provides an implementation by using the raised cosine window as an example.

It is assumed that an OFDM time domain signal obtained by performing FFT and adding a CP is denoted as $s_{ofdm}(n)$, a quantity of sampling points of an OFDM symbol is denoted as $N_{ofdm}$, where $0 \leq n < N_{ofdm}$, and a window function is denoted as w(n). In an example, a method for constructing the raised cosine window may be as follows: Values of first $N_{pf}$ elements satisfy Formula 1, values of last $N_{pf}$ elements are a reverse sequence of first $N_{pf}$ sampling points, and values of intermediate ($N_{ofdm}-2N_{pf}$) elements are 1:

$$w(n) = \frac{1}{2}\left(1 - \sin\left(\pi \frac{N_{pf} + 1 - 2i}{2N_{pf}}\right)\right), i = 1, \ldots, N_{pf}$$

Formula 1

It should be noted that the method for constructing the raised cosine window is merely an example for description. This is not limited in embodiments of this application.

In an example, FIG. 16 is a schematic diagram of a raised cosine window function according to an embodiment of this application. FIG. 16 shows a raised cosine window function of $N_{ofdm}$ = 1024 and $N_{pf}$ = 200 .

Time domain windowing indicates that a windowed signal $\tilde{s}_{ofdm}(n)$ is obtained by multiplying an OFDM symbol by a window function. In an example, the signal obtained through the windowing processing satisfies Formula 2:

$$\tilde{s}_{ofdm}(n) = s_{ofdm}(n)w(n), 0 \leq n \leq N_{ofdm}$$

Formula 2

Out-of-band leakage of the OFDM symbol after time domain windowing is significantly reduced. As shown by a curve (2) in (b) in FIG. 13, after time domain windowing, out-of-band leakage of the first signal is greatly reduced.

Optionally, the frequency domain positions of the first frequency resource are discontinuous.

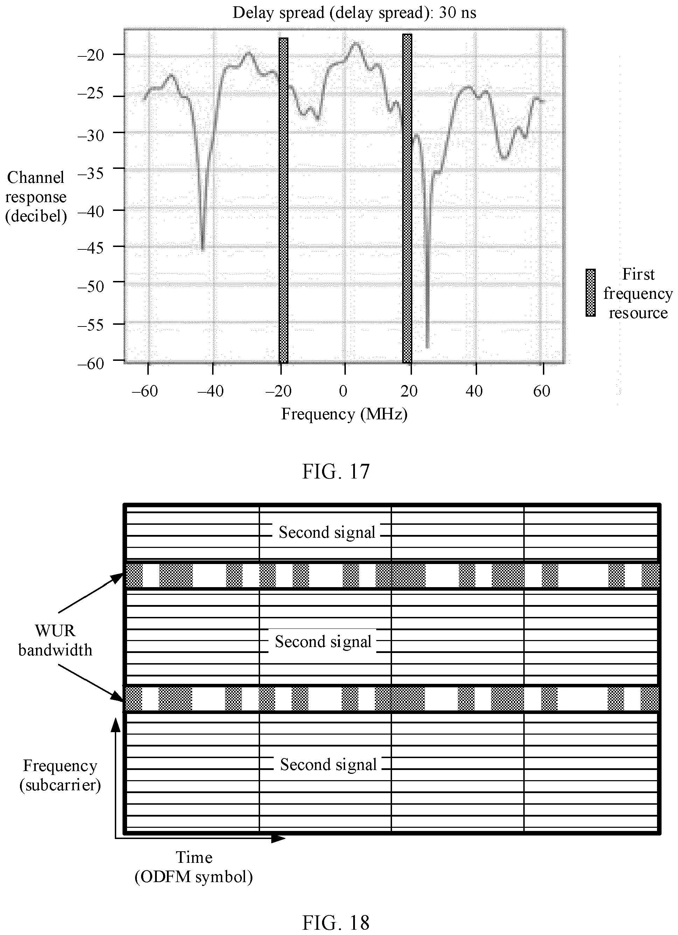

To achieve low-power consumption of the wake-up circuit, a relatively narrow bandwidth, that is, a relatively narrow bandwidth of the first frequency resource, may be allocated to the first link. However, a narrowband communication system may encounter a problem of lack of a frequency diversity gain. FIG. 17 is a schematic diagram of a frequency domain response of a channel. As shown in FIG. 17, due to impact of a multipath signal, the frequency domain response of the channel is not flat, and deep fading exists on some frequency bands. If the frequency domain positions of the first frequency resource are exactly located on a deep fading frequency, for example, 20 MHz to 30 MHz, signal quality of the first signal transmitted by using the first frequency resource is relatively poor.

Therefore, in embodiments of this application, the frequency domain positions of the first frequency resource are discontinuous, so that a frequency diversity gain may be obtained through frequency hopping, to obtain better transmission effect. As shown in FIG. 17, the frequency domain positions of the first frequency resource include two parts, and frequency domain positions of the two parts are discontinuous.

In an example, FIG. 18 is a schematic diagram of frequency domain positions of a first frequency resource according to an embodiment of this application. As shown in FIG. 18, the frequency domain positions of the first frequency resource may be located at two sides of a system bandwidth. In this case, intermediate frequencies used to transmit the first signal are discontinuous. In this way, a frequency diversity gain may be obtained through frequency hopping, to obtain better transmission effect.

It should be understood that the foregoing is an example for description. The frequency domain positions of the first frequency resource may be any position in the system bandwidth, provided that the frequency domain positions are discontinuous. For example, the first frequency resource may include intermediate resources in the system bandwidth, and the intermediate resources are discontinuous.

That the frequency domain positions of the first frequency resource are discontinuous indicates that the frequency domain positions of the first frequency resource include a plurality of discontinuous frequency domain positions. Optionally, the plurality of discontinuous frequency domain positions may be predefined in a standard, or may be configured and indicated by a network side. FIG. 17 or FIG. 18 is used as an example. The frequency domain positions of the first frequency resource include two discontinuous frequency domain positions, which are separately denoted as a first frequency domain position and a second frequency domain position for differentiation.

For example, the network device may indicate to the terminal device that a start position of the first frequency domain position is $N_{start,rb1}$, a bandwidth of the first frequency domain position is $N_{wur,rb1}$, a start position of the second frequency domain position is $N_{start,rb2}$, and a bandwidth of the second frequency domain position is $N_{wur,rb2}$.

For another example, it is assumed that bandwidths of all frequency domain positions are the same. In this case, the network device may indicate to the terminal device that a start position of the first frequency domain position is $N_{start,rb1}$, and a start position of the second frequency domain position is $N_{start,rb2}$. The bandwidth of the frequency domain position may be predefined in a standard, or may be configured by a network side. If the bandwidth of the frequency domain position is configured by the network side, the network side may send the bandwidth of the frequency domain position to the terminal device.

For another example, it is assumed that bandwidths of all frequency domain positions are the same, and there is an association relationship between a start position of the first frequency domain position and a start position of the second frequency domain position, for example, denoted as an association relationship #4. In this case, the network device may indicate to the terminal device that the start position of the first frequency domain position is $N_{start,rb1}$, and the terminal device may learn the start position of the second frequency domain position based on the start position of the first frequency domain position and the association relationship #4. The association relationship #4 may be predefined in a standard, or may be configured by a network side. If the association relationship #4 is configured by the network side, the network side may send the association relationship #4 to the terminal device. In a possible case, the association relationship #4 may be as follows: $N_{start,rb2}=f(N_{start,rb1})$, where $f$ represents a function.

It may be understood that the foregoing is merely an example for description, and a solution that enables the terminal device to learn the frequency domain positions of the first frequency resource is applicable to embodiments of this application.

Optionally, if the frequency domain positions of the first frequency resource include a plurality of frequency domain positions, for example, the first frequency domain position and the second frequency domain position, the network device may repeatedly send the first signal at the plurality of frequency domain positions, or may separately send different parts of the first signal at the plurality of frequency domain positions. The following describes the two possible cases by using the first frequency domain position and the second frequency domain position as an example.

In a first possible case, the network device sends a part of the first signal at the first frequency domain position, and sends a remaining part of the first signal at the second frequency domain position. Correspondingly, the terminal device receives a part of the first signal from the network device at the first frequency domain position, and the terminal device receives the remaining part of the first signal from the network device at the second frequency domain position.

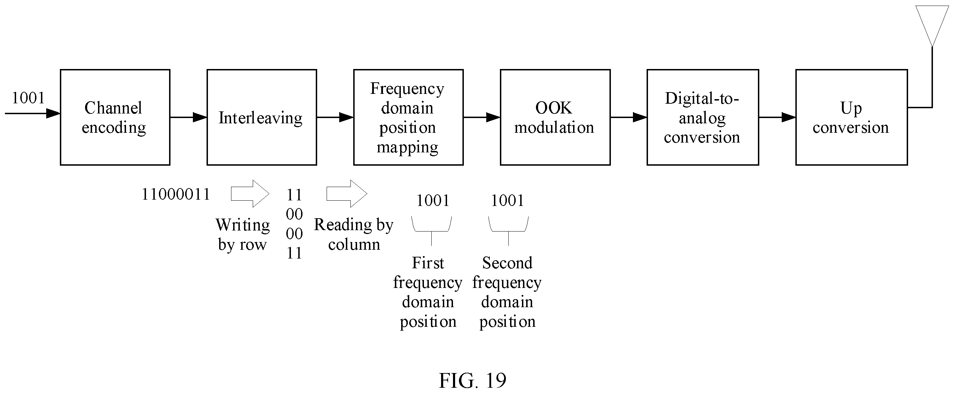

In an example, FIG. 19 is a schematic flowchart of sending a first signal at a plurality of discontinuous frequency domain positions according to an embodiment of this application.

As shown in FIG. 19, at a transmit end, to-be-encoded bits (for example, "1001") are encoded to obtain an encoded bit stream (for example, "11000011"). Interleaving processing is performed on the encoded bit stream, for example, writing by row and reading by column. A frequency domain position mapping operation is performed on a signal obtained through the interleaving processing. In embodiments of this application, the frequency domain positions may be a plurality of discontinuous frequency domain positions, for example, the first frequency domain position and the second frequency domain position. As shown in FIG. 19, bits mapped to the first frequency domain position are "1001", and bits mapped to the second frequency domain position are "1001". Then, OOK modulation, digital-to-analog conversion, and up conversion (up conversion) processing are performed. It may be understood that the foregoing procedure is an example for description. This is not limited in embodiments of this application.

In a second possible case, the network device sends the first signal at the first frequency domain position in first time, and the network device sends the first signal at the second frequency domain position in second time. Correspondingly, the terminal device separately receives the first signal at the first frequency domain position and the second frequency domain position. In other words, the terminal device receives the first signal at the first frequency domain position in the first time, and the terminal device receives the first signal at the second frequency domain position in the second time.

In the second possible case, at a transmit end, an encoded bit stream may be sent twice, and different frequency domain positions are used each time. For example, at the transmit end, to-be-encoded bits (for example, "1001") are encoded to obtain an encoded bit stream (for example, "11000011"). In one sending, the encoded bit stream is mapped to the first frequency domain position; and in another sending, the encoded bit stream is mapped to the second frequency domain position. Then, OOK modulation, digital-to-analog conversion, and up conversion processing are performed. It may be understood that the foregoing procedure is an example for description. This is not limited in embodiments of this application.

It may be understood that, in embodiments of this application, "receiving" may alternatively be replaced with "detecting" or "reading". For example, "receiving the first signal" may be replaced with "detecting the first signal" or "reading the first signal".

It may be further understood that, in some of the foregoing embodiments, "transmitting" is mentioned. Unless otherwise specified, transmitting includes receiving and/or sending. For example, transmitting a signal may include receiving a signal and/or sending a signal.

It may be further understood that, in some of the foregoing embodiments, the main circuit, the wake-up circuit, the main link, and the wake-up link are mainly used as examples for description. This is not limited in this application. For example, the "wake-up link/wake-up circuit" may be replaced with a "first module", may be replaced with "in a first state", or may be replaced with "in a first mode". For example, "transmitting a signal on a wake-up link" may alternatively be replaced with "transmitting a signal via a first module (or a first circuit)". The "main link/main circuit" may be replaced with a "second module", may be replaced with "in a second state", or may be replaced with "in a second mode". For example, "transmitting a signal on a main link" may alternatively be replaced with "transmitting a signal via a second module (or a second circuit)".

It may be further understood that the formulas used in embodiments of this application are examples for description, and do not constitute a limitation on the protection scope of embodiments of this application. In a process of calculating the foregoing related parameters, calculation may be performed according to the foregoing formulas, calculation may be performed according to variations of the foregoing formulas, calculation may be performed according to a formula determined by using the method provided in embodiments of this application, or calculation may be performed in another manner to satisfy a result of calculation of the formulas.

It may be further understood that, in embodiments of this application, an interaction between the terminal device and the network device is mainly used as an example for description. This is not limited in this application. The terminal device may be replaced with a receive end device, and the network device may be replaced with a transmit end device. The receive end device may be a terminal device or a network device, and the transmit end device may also be a terminal device or a network device. For example, the "terminal device" may be replaced with a "first terminal device", and the "network device" may be replaced with a "second terminal device".

It may be further understood that the examples in FIG. 9 to FIG. 19 in embodiments of this application are merely intended to help a person skilled in the art understand embodiments of this application, but are not intended to limit embodiments of this application to specific scenarios in the examples. A person skilled in the art definitely may make various equivalent modifications or changes based on the examples in FIG. 9 to FIG. 19, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that, in the foregoing method embodiments, the method and the operation implemented by the terminal device may also be implemented by a component (for example, a chip or a circuit) of the terminal device. In addition, the method and the operation implemented by the network device may also be implemented by a component (for example, a chip or a circuit) of the network device. This is not limited.

Corresponding to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the foregoing method embodiments are also applicable to the following apparatus embodiments.

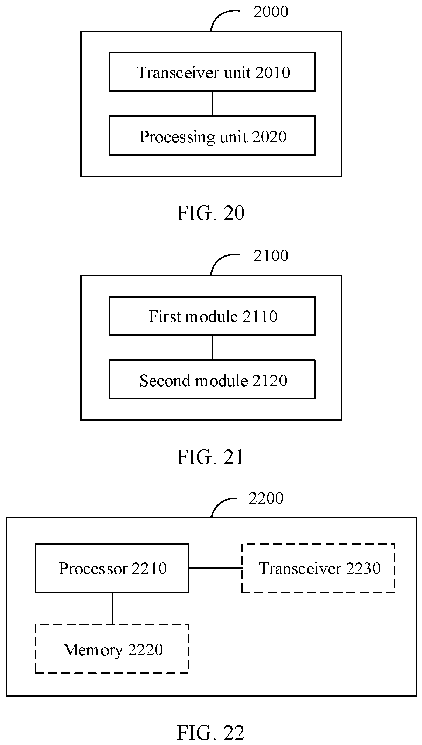

FIG. 20 is a schematic block diagram of a communication apparatus according to an embodiment of this application. The apparatus 2000 includes a transceiver unit 2010 and a processing unit 2020. The transceiver unit 2010 may be configured to implement a corresponding communication function. The transceiver unit 2010 may also be referred to as a communication interface or a communication unit. The processing unit 2020 may be configured to perform data or signal processing.

Optionally, the apparatus 2000 further includes a storage unit. The storage unit may be configured to store instructions and/or data. The processing unit 2020 may read the instructions and/or the data in the storage unit, so that the apparatus executes the actions of the terminal device in the foregoing method embodiments.

The apparatus 2000 may be configured to execute an action performed by the communication device (for example, the terminal device or the network device) in the foregoing method embodiments. In this case, the apparatus 2000 may be the communication device or a component of the communication device, the transceiver unit 2010 is configured to perform a transceiver-related operation of the communication device (for example, the terminal device, or for another example, the network device) in the foregoing method embodiments, and the processing unit 2020 is configured to perform a processing-related operation of the communication device (for example, the terminal device, or for another example, the network device) in the foregoing method embodiments.

When the apparatus 2000 is configured to implement a function of the terminal device in the foregoing method embodiments: the transceiver unit 2010 is configured to receive a first signal from the network device by using a first frequency resource; and the transceiver unit 2010 is further configured to transmit, based on the first signal, a second signal with the network device by using a second frequency resource. The first frequency resource and the second frequency resource are different frequency domain resources in a system bandwidth, and a subcarrier spacing of the first frequency resource is different from a subcarrier spacing of the second frequency resource.

The apparatus 2000 may implement the steps or procedures performed by the terminal device in the method embodiments according to embodiments of this application. The apparatus 2000 may include units configured to perform the method performed by the terminal device in embodiments shown in FIG. 9 to FIG. 19.

When the apparatus 2000 is configured to implement a function of the network device in the foregoing method embodiments: the transceiver unit 2010 is configured to send a first signal to a first terminal device by using a first frequency resource; and the transceiver unit 2010 is further configured to transmit, based on the first signal, a second signal with a first terminal device by using a second frequency resource. The first frequency resource and the second frequency resource are different frequency domain resources in a system bandwidth, and a subcarrier spacing of the first frequency resource is different from a subcarrier spacing of the second frequency resource.

The apparatus 2000 may implement the steps or procedures performed by the network device in the method embodiments according to embodiments of this application. The apparatus 2000 may include units configured to perform the method performed by the network device in embodiments shown in FIG. 9 to FIG. 19.

For more detailed descriptions of the apparatus 2000, refer to related descriptions in the foregoing method embodiments. Details are not described herein again.

It should be understood that the apparatus 2000 herein is embodied in a form of functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2000 may be specifically the terminal device in the foregoing embodiments, and may be configured to perform the procedures and/or steps corresponding to the terminal device in the foregoing method embodiments. To avoid repetition, details are not described herein again.

The apparatus 2000 in each of the foregoing solutions has a function of implementing corresponding steps performed by a device (for example, the terminal device or the network device) in the foregoing method. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, a receiving unit in the transceiver unit may be replaced by a receiver), and another unit such as a processing unit may be replaced with a processor, to separately perform a transceiver operation and a related processing operation in each method embodiment.

In addition, the transceiver unit 2010 may alternatively be a transceiver circuit (for example, may include a receiving circuit and a sending circuit), and the processing unit may be a processing circuit.

It should be noted that the apparatus in FIG. 20 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited.

FIG. 21 is a schematic block diagram of another communication apparatus according to an embodiment of this application. The apparatus 2100 includes a first module 2110 and a second module 2120.

The first module 2110 may be, for example, a wake-up circuit, or may be a module (for example, a receiving module) of a wake-up circuit. The first module 2110 may be configured to perform an operation performed by a wake-up circuit of the communication device (for example, the terminal device, or for another example, the network device) in the foregoing method embodiments, may be configured to perform an operation performed by the communication device (for example, the terminal device, or for another example, the network device) on the first link in the foregoing method embodiments, may be configured to perform an operation performed when the communication device (for example, the terminal device, or for another example, the network device) is in the first state in the foregoing method embodiments, or may be configured to perform an operation performed when the communication device (for example, the terminal device, or for another example, the network device) is in the first mode in the foregoing method embodiments. The following uses only the terminal device as an example for description.

The second module 2120 may be, for example, a main circuit, or may be a module (for example, a receiving module) of a main circuit. The first module 2110 and the second module 2120 may be integrated together, or may be disposed separately. The second module 2120 may be configured to perform an operation performed by a main circuit of the communication device (for example, the terminal device, or for another example, the network device) in the foregoing method embodiments, may be configured to perform an operation performed by the communication device (for example, the terminal device, or for another example, the network device) on the second link in the foregoing method embodiments, may be configured to perform an operation performed when the communication device (for example, the terminal device, or for another example, the network device) is in the second state in the foregoing method embodiments, or may be configured to perform an operation performed when the communication device (for example, the terminal device, or for another example, the network device) is in the second mode in the foregoing method embodiments.

In a possible manner, the terminal device receives the first signal from the network device via the first module 2110 by using the first frequency resource; and the terminal device transmits, based on the first signal, the second signal with the network device via the second module 2110 by using the second frequency resource. For more detailed descriptions of the apparatus 2100, refer to related descriptions in the foregoing method embodiments. Details are not described herein again.

FIG. 22 is a schematic block diagram of still another communication apparatus according to an embodiment of this application. The apparatus 2200 includes a processor 2210. The processor 2210 is coupled to a memory 2220. The memory 2220 is configured to store a computer program or instructions and/or data. The processor 2210 is configured to execute the computer program or the instructions stored in the memory 2220, or read data stored in the memory 2220, to perform the methods in the foregoing method embodiments.

In some embodiments, there are one or more processors 2210.

In some embodiments, there are one or more memories 2220.

In some embodiments, the memory 2220 and the processor 2210 are integrated together, or are disposed separately.

In some embodiments, as shown in FIG. 22, the apparatus 2200 further includes a transceiver 2230. The transceiver 2230 is configured to receive and/or send a signal. For example, the processor 2210 is configured to control the transceiver 2230 to receive and/or send a signal.

In a solution, the apparatus 2200 is configured to implement an operation performed by the device (for example, the terminal device, or for another example, the network device) in the foregoing method embodiments.

For example, the processor 2210 is configured to execute the computer program or the instructions stored in the memory 2220, to implement related operations of the network device in the foregoing method embodiments.

For another example, the processor 2210 is configured to execute the computer program or the instructions stored in the memory 2220, to implement related operations of the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example and not limitation, the RAM includes a plurality of forms as follows: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described in this specification aims to include but be not limited to these memories and any memory of another appropriate type.

An embodiment of this application further provides a computer-readable storage medium. The computer-readable storage medium stores computer instructions used to implement the method performed by the device (for example, the terminal device, or for another example, the network device) in the foregoing method embodiments.

For example, when a computer program is executed by a computer, the computer is enabled to implement the method performed by the network device in the foregoing method embodiments.

For another example, when a computer program is executed by a computer, the computer is enabled to implement the method performed by the terminal device in the foregoing method embodiments.

An embodiment of this application further provides a computer program product, including instructions. When the instructions are executed by a computer, the method performed by the device (for example, the terminal device, or for another example, the network device) in the foregoing method embodiments is implemented.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the apparatus embodiments described above are merely examples. For example, the division into units is merely a logical function division and may be other divisions in actual implementation. For example, a plurality of units or components may be combined or integrated into another system, or some features may be ignored or may not be performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used for implementation, all or some of the embodiments may be implemented in a form of computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but be not limited to various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited. Any variation or replacement readily figured out by a person skilled in the art within the technical scope disclosed in this application shall fall within the protection scope of this application. Therefore, the protection scope of this application shall be subject to the protection scope of the claims.

### Claims

1. A signal transmission method, comprising:

receiving, by a terminal device, a first signal from a network device by using a first frequency resource; and
transmitting, by the terminal device based on the first signal, a second signal with the network device by using a second frequency resource, wherein
the first frequency resource and the second frequency resource are different frequency domain resources in a system bandwidth, and a subcarrier spacing of the first frequency resource is different from a subcarrier spacing of the second frequency resource.

2. The method according to claim 1, wherein
time for the terminal device to demodulate the first signal by using the first frequency resource is related to a preset interval, and the preset interval is different from a length of a cyclic prefix corresponding to the subcarrier spacing of the first frequency resource.

3. The method according to claim 2, wherein the receiving, by a terminal device, a first signal from a network device by using a first frequency resource comprises:
from a start moment of each receive symbol, demodulating, by the terminal device, the first signal from the network device by using the first frequency resource after the preset interval.

4. The method according to claim 2 or 3, wherein

the preset interval is associated with any one piece of the following information: frequency domain positions of the first frequency resource, the subcarrier spacing of the first frequency resource, or a length of a cyclic prefix used for a bandwidth part BWP of the terminal device;
or
the method further comprises: receiving, by the terminal device, the preset interval from the network device.

5. The method according to any one of claims 1 to 4, wherein the receiving, by a terminal device, a first signal from a network device by using a first frequency resource comprises:
receiving, by the terminal device, the first signal from the network device by using a subcarrier other than N1 subcarriers in the first frequency resource, wherein the N1 subcarriers indicate one or more subcarriers that are in the first frequency resource and that are adjacent to the second frequency resource, and N1 is an integer greater than 1 or equal to 1.

6. The method according to any one of claims 1 to 5, wherein the transmitting, by the terminal device, a second signal with the network device by using a second frequency resource comprises:
transmitting, by the terminal device, the second signal with the network device by using a subcarrier other than N2 subcarriers in the second frequency resource, wherein the N2 subcarriers indicate one or more subcarriers that are in the second frequency resource and that are adjacent to the first frequency resource, and N2 is an integer greater than 1 or equal to 1.

7. The method according to any one of claims 1 to 6, wherein the frequency domain positions of the first frequency resource are discontinuous.

8. The method according to any one of claims 1 to 7, wherein the frequency domain positions of the first frequency resource comprise a first frequency domain position and a second frequency domain position; and
the receiving, by a terminal device, a first signal from a network device by using a first frequency resource comprises:

receiving, by the terminal device, a part of the first signal from the network device at the first frequency domain position, and receiving, by the terminal device, a remaining part of the first signal from the network device at the second frequency domain position; or
receiving, by the terminal device, the first signal from the network device at the first frequency domain position in first time, and receiving, by the terminal device, the first signal from the network device at the second frequency domain position in second time.

9. The method according to any one of claims 1 to 8, wherein the method further comprises:
receiving, by the terminal device, configuration information about the first frequency resource by using the second frequency resource.

10. A signal transmission method, wherein the method is applied to a terminal device, the terminal device comprises a first module and a second module, and the method comprises:

receiving, by the terminal device, a first signal from a network device via the first module by using a first frequency resource; and
transmitting, by the terminal device based on the first signal, a second signal with the network device via the second module by using a second frequency resource, wherein
the first frequency resource and the second frequency resource are different frequency domain resources in a system bandwidth, and a subcarrier spacing of the first frequency resource is different from a subcarrier spacing of the second frequency resource.

11. The method according to claim 10, wherein
    time for the terminal device to demodulate the first signal via the first module by using the first frequency resource is related to a preset interval, and the preset interval is different from a length of a cyclic prefix corresponding to the subcarrier spacing of the first frequency resource.

12. The method according to claim 11, wherein the receiving, by the terminal device, a first signal from a network device via the first module by using a first frequency resource comprises:
    from a start moment of each receive symbol, demodulating, by the terminal device, the first signal from the network device via the first module by using the first frequency resource after the preset interval.

13. The method according to claim 11 or 12, wherein

    the preset interval is associated with any one piece of the following information: frequency domain positions of the first frequency resource, the subcarrier spacing of the first frequency resource, or a length of a cyclic prefix used for a bandwidth part BWP of the terminal device;
    or
    the method further comprises: receiving, by the terminal device, the preset interval from the network device.

14. The method according to any one of claims 10 to 13, wherein the receiving, by the terminal device, a first signal from a network device via the first module by using a first frequency resource comprises:
    receiving, by the terminal device, the first signal from the network device via the first module by using a subcarrier other than N1 subcarriers in the first frequency resource, wherein the N1 subcarriers indicate one or more subcarriers that are in the first frequency resource and that are adjacent to the second frequency resource, and N1 is an integer greater than 1 or equal to 1.

15. The method according to any one of claims 10 to 14, wherein the transmitting, by the terminal device, a second signal with the network device via the second module by using a second frequency resource comprises:
    transmitting, by the terminal device, the second signal with the network device via the second module by using a subcarrier other than N2 subcarriers in the second frequency resource, wherein the N2 subcarriers indicate one or more subcarriers that are in the second frequency resource and that are adjacent to the first frequency resource, and N2 is an integer greater than 1 or equal to 1.

16. The method according to any one of claims 10 to 15, wherein the frequency domain positions of the first frequency resource are discontinuous.

17. The method according to any one of claims 10 to 16, wherein the frequency domain positions of the first frequency resource comprise a first frequency domain position and a second frequency domain position; and
    the receiving, by the terminal device, a first signal from a network device via the first module by using a first frequency resource comprises:

    receiving, by the terminal device, a part of the first signal from the network device via the first module at the first frequency domain position, and receiving, by the terminal device, a remaining part of the first signal from the network device via the first module at the second frequency domain position; or
    receiving, by the terminal device, the first signal from the network device via the first module at the first frequency domain position in first time, and receiving, by the terminal device, the first signal from the network device via the first module at the second frequency domain position in second time.

18. The method according to any one of claims 10 to 17, wherein the method further comprises:
    receiving, by the terminal device, configuration information about the first frequency resource via the second module by using the second frequency resource.

19. The method according to claim 9 or 18, wherein the configuration information about the first frequency resource comprises one or more pieces of the following information:
    a bandwidth of the first frequency resource, the frequency domain positions of the first frequency resource, and the subcarrier spacing of the first frequency resource.

20. The method according to any one of claims 1 to 19, wherein the first signal is a signal obtained by multiplying a time domain signal by a window function.

21. A signal transmission method, wherein the method comprises:

sending, by a network device, a first signal to a first terminal device by using a first frequency resource; and transmitting, by the network device based on the first signal, a second signal with the first terminal device by using a second frequency resource, wherein
the first frequency resource and the second frequency resource are different frequency domain resources in a system bandwidth, and a subcarrier spacing of the first frequency resource is different from a subcarrier spacing of the second frequency resource.

22. The method according to claim 21, wherein the method further comprises:
when the network device sends the first signal to the first terminal device by using the first frequency resource, transmitting, by the network device, a signal with a second terminal device by using the second frequency resource.

23. The method according to claim 21 or 22, wherein

the method further comprises: sending, by the network device, a preset interval to the first terminal device; or
the preset interval is associated with any one piece of the following information: frequency domain positions of the first frequency resource, the subcarrier spacing of the first frequency resource, or a length of a cyclic prefix used for a bandwidth part BWP of the terminal device, wherein
the preset interval is used by the first terminal device to determine time for demodulating the first signal, and the preset interval is different from a length of a cyclic prefix corresponding to the subcarrier spacing of the first frequency resource.

24. The method according to any one of claims 21 to 23, wherein the sending, by a network device, a first signal to a first terminal device by using a first frequency resource comprises:
sending, by the network device, the first signal to the first terminal device by using a subcarrier other than N1 subcarriers in the first frequency resource, wherein the N1 subcarriers indicate one or more subcarriers that are in the first frequency resource and that are adjacent to the second frequency resource, and N1 is an integer greater than 1 or equal to 1.

25. The method according to any one of claims 21 to 24, wherein the transmitting, by the network device, a second signal with the first terminal device by using a second frequency resource comprises:
transmitting, by the network device, the second signal with the first terminal device by using a subcarrier other than N2 subcarriers in the second frequency resource, wherein the N2 subcarriers indicate one or more subcarriers that are in the second frequency resource and that are adjacent to the first frequency resource, and N2 is an integer greater than 1 or equal to 1.

26. The method according to any one of claims 21 to 25, wherein the first signal is a signal obtained by multiplying a time domain signal by a window function.

27. The method according to any one of claims 21 to 26, wherein the frequency domain positions of the first frequency resource are discontinuous.

28. The method according to any one of claims 21 to 27, wherein the frequency domain positions of the first frequency resource comprise a first frequency domain position and a second frequency domain position; and
the sending, by a network device, a first signal to a first terminal device by using a first frequency resource comprises:

sending, by the network device, a part of the first signal to the first terminal device at the first frequency domain position, and sending, by the network device, a remaining part of the first signal to the first terminal device at the second frequency domain position; or
sending, by the network device, the first signal to the first terminal device at the first frequency domain position in first time, and sending, by the network device, the first signal to the first terminal device at the second frequency domain position in second time.

29. The method according to any one of claims 21 to 28, wherein the method further comprises:

sending, by the network device, configuration information about the first frequency resource to the first terminal device by using the second frequency resource.

30. The method according to claim 29, wherein the configuration information about the first frequency resource comprises one or more pieces of the following information:
a bandwidth of the first frequency resource, the frequency domain positions of the first frequency resource, and the subcarrier spacing of the first frequency resource.

31. A signal transmission apparatus, comprising a module or a unit configured to perform the method according to any one of claims 1 to 30.

32. A signal transmission apparatus, comprising a processor, wherein the processor is configured to execute a computer program or instructions stored in a memory, so that the apparatus performs the method according to any one of claims 1 to 30.

33. The apparatus according to claim 32, wherein the apparatus further comprises the memory.

34. The apparatus according to claim 32 or 33, wherein the apparatus further comprises a communication interface, and the communication interface is coupled to the processor; and
the communication interface is configured to input and/or output information.

35. A computer-readable storage medium, wherein the computer-readable storage medium stores a computer program or instructions, and when the computer program or the instructions are run on a computer, the computer is enabled to perform the method according to any one of claims 1 to 30.

36. A computer program product, wherein the computer program product comprises a computer program or instructions for performing the method according to any one of claims 1 to 30.

37. A chip, wherein the chip is coupled to a memory, and is configured to read and execute program instructions stored in the memory, to implement the method according to any one of claims 1 to 30.

FIG. 1

FIG. 2

FIG. 3

FIG. 4

EP 4 415 457 A1

PRB 2
Subcarriers
24 to 35

PRB 1
Subcarriers
12 to 23

PRB 0
Subcarriers
0 to 11

| Symbol 0 | Symbol 1 | Symbol 2 | Symbol 3 | Symbol 4 | Symbol 5 | Symbol 6 |

FIG. 5

Subcarrier
spacing 15 kHz

OFDM symbol 1          OFDM symbol 2

Subcarrier
spacing 30 kHz

Subcarrier
spacing 60 kHz

Subcarrier
spacing 120 kHz

Subcarrier
spacing 240 kHz

FIG. 6

Subcarriers
0 to 11

ON   OFF   ON   ON   OFF   ON   OFF   OFF   ON

(a)

(b)

FIG. 7

Frequency
(subcarrier)

Time
(OFDM symbol)

WUR
bandwidth
(4 MHz)

System
bandwidth
(20 MHz)

FIG. 8

900

```
┌──────────────────┐                                    ┌──────────────────┐
│ Terminal device  │                                    │  Network device  │
└──────────────────┘                                    └──────────────────┘
```

910: Receive configuration information about a first
frequency resource by using a second frequency resource

910: Receive a first signal by using the first frequency resource

920: Transmit, based on the first signal, a second signal by using the second
frequency resource

FIG. 9

WUR bandwidth

| ON | OFF | ON | ON |

Frequency
(subcarrier)

Second signal

Time (ODFM symbol)

FIG. 10

WUR bandwidth
(a subcarrier
spacing is 240 kHz)

Second signal (a subcarrier
spacing is 30 kHz)

Second signal (a subcarrier
spacing is 30 kHz)

Frequency
(subcarrier)

Time
(ODFM symbol)

FIG. 11

Subcarrier spacing of 30 kHz

Receive window

Transmit symbol

| CP | Data | CP | Data |

Through a multipath channel

τ1
τ2

Subcarrier spacing of 120 kHz

ON          OFF

ISI interval

Transmit symbol

CP | Data

Through a multipath channel

τ1
τ2

t0  t1        t2   t3

FIG. 12

Amplitude

Frequency

(a)

Amplitude

(2)

(1)

Frequency

(b)

FIG. 13

FIG. 14

FIG. 15

FIG. 16

Delay spread (delay spread): 30 ns

FIG. 17

FIG. 18

1001 → | Channel encoding | → | Interleaving | → | Frequency domain position mapping | → | OOK modulation | → | Digital-to-analog conversion | → | Up conversion | →

11000011 ⇒ 11 00 00 11 ⇒ 1001    1001

Writing by row    Reading by column

First frequency domain position    Second frequency domain position

FIG. 19

2000

```
┌─────────────────────────────────┐
│   ┌─────────────────────────┐   │
│   │  Transceiver unit 2010  │   │
│   └────────────┬────────────┘   │
│                │                │
│   ┌────────────┴────────────┐   │
│   │  Processing unit 2020   │   │
│   └─────────────────────────┘   │
└─────────────────────────────────┘
```

FIG. 20

2100

```
┌─────────────────────────────────┐
│   ┌─────────────────────────┐   │
│   │    First module 2110    │   │
│   └────────────┬────────────┘   │
│                │                │
│   ┌────────────┴────────────┐   │
│   │   Second module 2120    │   │
│   └─────────────────────────┘   │
└─────────────────────────────────┘
```

FIG. 21

2200

```
┌──────────────────────────────────────────────┐
│  ┌─────────────────┐     ┌─ ─ ─ ─ ─ ─ ─ ─ ─┐ │
│  │ Processor 2210  ├─────┤ Transceiver 2230 │ │
│  └───────┬─────────┘     └─ ─ ─ ─ ─ ─ ─ ─ ─┘ │
│          │                                    │
│  ┌─ ─ ─ ─┴─ ─ ─ ─┐                            │
│  │  Memory 2220  │                            │
│  └─ ─ ─ ─ ─ ─ ─ ─┘                            │
└──────────────────────────────────────────────┘
```

FIG. 22

## INTERNATIONAL SEARCH REPORT

| International application No. |
| --- |
| **PCT/CN2022/128592** |

**A.    CLASSIFICATION OF SUBJECT MATTER**

H04W 72/04(2023.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; CNKI; ENTXT; ENTXTC: 主电路, 唤醒接收机, 主模块, 频率, 唤醒, 叫醒, 侦听, 第二, 子载波间隔, 监听, WUR, 不同, 传输, 发送, 第一, 主接收机, 接收, major circuit, main circuit, wake up receiver, frequency, wake, listen, monitoring, frist, second, sub?carrier, different, various, transf+, send+, receiv+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 108737306 A (NOKIA SHANGHAI BELL CO., LTD.) 02 November 2018 (2018-11-02) description, paragraphs 0006-0010 | 1, 7, 10, 16, 21, 27 |
| A | CN 106538019 A (BEIJING XIAOMI MOBILE SOFTWARE CO., LTD.) 22 March 2017 (2017-03-22) entire document | 1-37 |
| A | CN 108282847 A (ZTE CORP.) 13 July 2018 (2018-07-13) entire document | 1-37 |
| A | WO 2020069641 A1 (HUAWEI TECHNOLOGIES CO., LTD.) 09 April 2020 (2020-04-09) entire document | 1-37 |
| A | WO 2020048613 A1 (TELEFONAKTIEBOLAGET LM ERICSSON (PUBL)) 12 March 2020 (2020-03-12) entire document | 1-37 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 January 2023** | **19 January 2023** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2022/128592** |

| Patent document cited in search report | | | Publication date (day/month/year) | Patent family member(s) | | | Publication date (day/month/year) |
|---|---|---|---|---|---|---|---|
| CN | 108737306 | A | 02 November 2018 | None | | | |
| CN | 106538019 | A | 22 March 2017 | WO | 2018082018 | A1 | 11 May 2018 |
| | | | | US | 2021168761 | A1 | 03 June 2021 |
| | | | | US | 2020059893 | A1 | 20 February 2020 |
| | | | | EP | 3537792 | A1 | 11 September 2019 |
| CN | 108282847 | A | 13 July 2018 | WO | 2018126859 | A1 | 12 July 2018 |
| WO | 2020069641 | A1 | 09 April 2020 | US | 2021399934 | A1 | 23 December 2021 |
| | | | | CN | 112771991 | A | 07 May 2021 |
| WO | 2020048613 | A1 | 12 March 2020 | JP | 2021536192 | A | 23 December 2021 |
| | | | | US | 2021258196 | A1 | 19 August 2021 |
| | | | | EP | 3847787 | A1 | 14 July 2021 |
| | | | | BR | 112021004222 | A2 | 25 May 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111318168
- CN 202111589267